# EUROPEAN PATENT APPLICATION

(11) **EP 1 892 991 A1**
(43) Date of publication of application: **27.02.2008**
(21) Application number: 06767782.3
(22) Date of filing: 03.07.2006
(51) Int. Cl.: H04Q 7/38, H04B 7/26, H04M 3/00

(54) **GROUP NETWORK FORMING METHOD AND GROUP NETWORK SYSTEM**

(30) Priority: 04.07.2005 JP 2005195619; 08.07.2005 JP 2005200338; 06.02.2006 JP 2006029069
(71) Applicant: MATSUSHITA ELECTRIC INDUSTRIAL CO., LTD., Osaka 571-8501 (JP)
(72) Inventor: TAKEI, Yoshihiko Panasonic Mobile Communications Co., Ltd, Kanagawa 224-8539 (JP)
(74) Representative: Zimmer, Franz-Josef
(86) International application number: PCT/JP2006/313251
(87) International publication number: WO 2007/004623

(57) **Abstract**

To allow mobile communication terminal apparatuses or a plurality of communication terminal apparatuses, which are connected to a network of the communication terminal apparatuses belonging to home electrical products or the like, to participate in a group network service; reduce the user's burdens in registering with the group network; and provide a secure group network service. In this communication terminal apparatus, when detecting the connection of a memory card (13), a control part (100) receives a memory identifier and public key information from the memory card (13), and notifies them to a group network forming part (112). In response to the notification of the memory identifier (MID-X) reception, the group network forming part (112) outputs a memory information registration request to the control part (100). In response to the input of the memory information registration request, the control part (100) causes a communication part (101) to transmit, to a mobile network management apparatus (20), the memory information registration request together with the memory identifier and public key information.

## Description

### Technical Field

The present invention relates to a group network forming method, group network system, group network management apparatus, mobile communication terminal apparatus, and communication terminal apparatus, and particularly relates to a group network forming method, groupnetwork system, group network management apparatus, mobile communication terminal apparatus, and communication terminal apparatus registering mobile communication terminal apparatus and communication terminal apparatus in a group network. Background Art

In recent years, group networks have been configured with a plurality of communication equipment grouped together on a network, with group network services managed and operated by a management server on the network then being provided to this group network. With this service, identification information for a plurality of communication equipment connected to a network and to be grouped, is registered in a management server managed by the service provider providing the group network service. This means that supplying of services in group units to registered communication equipment, and the supplying of services between communication equipment registered in the same group is possible. In this way, a group network configuration constituting a network utilizing a plurality of communication equipment such as mobile telephones etc. an individual user is in possession of, referred to as, for example, a PN (Personal Network) is noted as a service configuration utilizing a network. Standardization of technology relating to PN by 3GPP (3rd Generation Partnership Project) is far advanced (see non-patent document 1).

According to this 3GPP standard, technology is proposed where communication equipment such as a mobile telephone etc. connected to a detachable memory card storing identification information (mobile telephone number etc.) referred to as a USIM (Universal Subscriber Identity Module) pre-registering networks housing communication equipment is assumed, and a PN (Personal Network) is formed using detachable memory card-type communication equipment installed with a plurality of USIM's in the possession of an individual.

Further, it is also assumed that group networks not only utilize public networks such as telephone networks etc. but also utilize networks such as LANs (Local Area Network) and the Internet etc., and that a plurality of communication equipment housed in a plurality of different types of networks will be grouped together.

For example, personal communication trace connection methods such as disclosed in patent document 1 exist as technology relating to group networks for grouping communication terminals housed in a plurality of different types of networks. In this method, a personal communication number corresponding to a person is assigned, a user registers a corresponding relationship of an own personal communication number and a terminal number of a terminal, and this network is capable of forming a group network using communication equipment housed in a plurality of different types of network by registering this corresponding relationship in a home network managing the group network.
Patent Document 1: Japanese Patent Application Laid-Open No.HEI.5-145963.
Non-patent document 1: TSG S#27(05)0386 "New WI for Personal Network(PN) and Personal Area Network(PAN)" 3GPP.

### Disclosure of Invention

### Problems to be Solved by the Invention

However, in patent document 1 described above, upon registration of communication equipment to a group network, it is assumed that which group network the communication equipment is registered to is designated by the user. Accordingly, for example, in the event that it is wished to group a certain two items of communication equipment, when one of the items of communication equipment is already registered to a group network, the user has to understand which group network this communication equipment is registered to, and this places a heavy load on the user, particularly in the case where the user is participating in a plurality of group networks.

Further, in the above patent document 1, it is presumed that during registration of communication equipment to a group network, which group network the communication equipment is registered to is inputted by the user, and that from a security point of view of impersonation prevention etc., it is necessary for content input by the user to be securely held, and that this puts a load on the user.

Further, in patent document 1, during registration of communication equipment to a group network, it is assumed that the corresponding relationship of the identification information for the communication equipment and the user information etc. is registered in a network housing each item of communication equipment, and it is necessary for all of the communication equipment to be housed in advance in the network. Moreover, according to the above 3GPP standard, communication equipment installed with a memory card storing the USIM is assumed, and it is necessary to acquire this kind of memory card in advance. This also places a load on the user.

Further, according to the aforementioned 3GPP standard, it is assumed that the communication equipment uses identification information stored on a UICC (Universal Integrated Circuit Card) such as an existing FOMA card (trademark) during registration of communication equipment to a group network and that it is therefore not possible to store identification information in other detachable memory cards that are widely used in mobile telephone equipment and other mobile electronic equipment such as SD (trademark), nor is acquisition possible by identification methods such as via near distance wireless such as NFC (Near-Field Communications) etc. This is limiting with regards to making group network services widespread and limits the range of applications of the services, and is therefore a service that is difficult for a user to utilize.

Further, methods of charging to communication equipment forming group networks are disclosed in group networks of the related art.

It is therefore an obj ect of the present invention to provide a group network forming method, group network system, group network management apparatus, mobile communication terminal apparatus, and communication terminal apparatus for supplying secure group network services that is capable of enabling a plurality of communication terminal apparatuses such as communication terminal apparatus etc. belonging to a mobile communication terminal apparatus or connected to a network or home electrical appliances etc. to participate in group network services, as well as enabling the alleviation of the load on users in registering to this group network. Means for Solving the Problem

The group network forming method of the present invention groups and registers a plurality of communication terminal apparatuses connected to a network in a group network management apparatus, and provides a group network registration step of transmitting together identification information of the communication terminal apparatuses to be grouped.

Further, in the group network system of the present invention for registering and grouping a plurality of communication terminal apparatuses connected to a network in a group network management apparatus, and, in this system, the communication terminal apparatus comprises: a terminal identification information memory section that stores the communication terminal identification information already registered in the group network management apparatus; a terminal identification information acquisition section that acquires the communication terminal identification information not yet registered in the group network management apparatus; and a transmission section that reads the communication terminal identification information from the terminal identification information memory section and the terminal identification information acquisition section and transmits the information to the group network management apparatus together with a communication terminal information registration request; and the group network management apparatus comprises: a receiving section that receives the communication terminal information registration request transmitted from the communication terminal apparatus and the plurality of communication terminal identification information; and a communication terminal information memory section that registers the received plurality of communication terminal identification information.

Further, the group network management apparatus of the present invention for grouping a plurality of communication terminal apparatuses connected to a network has: a receiving section that receives the communication terminal information registration request transmitted from the communication terminal apparatus and the plurality of communication terminal identification information; and a communication terminal information memory section that groups and registers the received plurality of communication terminal identification information registration in the communication terminal information

Further, the mobile communication terminal apparatus of the present invention for transmitting a request for registration to a group network to a group network management apparatus connected via a wireless network, the apparatus has: a terminal identification information memory section that stores the communication terminal identification information already registered in the group network management apparatus; a terminal identification information acquisition section that acquires the communication terminal identification information not yet registered in the group network management apparatus; and a transmission section that reads the communication terminal identification information from the terminal identification information memory section and the terminal identification information acquisition section, and transmits the information to the group network management apparatus together with a communication terminal information registration request.

### Advantageous Effect of the Invention

According to the present invention, while forming a group network service for a plurality of communication terminal apparatuses connected to a network, it is possible to alleviate the load on a user, and broaden the applicable range of secure group network services.

### Brief Description of the Drawings

FIG. 1 is a view showing a system configuration of a group network system according to the first embodiment of the present invention;
FIG.2 is a block diagram showing an outline configuration of a mobile telephone according to the first embodiment of the present invention;
FIG.3 is a block diagram showing an outline configuration of mobile network management apparatus according to the first embodiment of the present invention;
FIG.4 is a view showing an example of a mobile terminal identifier management table according to the first embodiment of the present invention;
FIG.5 is a view showing an example of a group network management table according to the first embodiment of the present invention;
FIG. 6 is a view showing an example of a communication terminal identifier management table according to the first embodiment of the present invention;
FIG.7 is a block diagram showing an outline configuration of a communication terminal according to the first embodiment of the present invention;
FIG.8 is a block diagram showing an outline configuration of a memory card according to the first embodiment of the present invention;
FIG. 9 is a view showing the operation upon formation of a group network in the mobile telephone and memory card according to the first embodiment of the present invention;
FIG.10 is a flowchart showing group network forming processing executed at the mobile telephone and memory card according to the first embodiment of the present invention;
FIG.11 is a view showing a first communication terminal information registration operation in mobile network management apparatus according to the first embodiment of the present invention;
FIG.12 is a flowchart showing first communication terminal information registration processing executed by mobile network management apparatus according to the first embodiment of the present invention;
FIG. 13 is a view showing an example of a group network management table registered with first communication terminal information according to the first embodiment of the present invention;
FIG.14 is a view showing a communication terminal identifier management table registered with first communication terminal information according to the first embodiment of the present invention;
FIG.15 is a view showing a data read operation in the mobile telephone and memory card according to the first embodiment of the present invention;
FIG.16 is a flowchart showing data write processing executed at the mobile telephone and memory card according to the first embodiment of the present invention;
FIG.17 is a view showing the operation upon formation of a group network in the communication terminal and memory card according to the first embodiment of the present invention;
FIG.18 is a flowchart showing group network forming processing executed at the communication terminal and memory card according to the first embodiment of the present invention;
FIG.19 is a view showing the operation upon second communication terminal information registration in mobile network management apparatus according to the first embodiment of the present invention;
FIG.20 is a flowchart showing second communication terminal information registration processing executed by mobile network management apparatus according to the first embodiment of the present invention;
FIG.21 is a view showing a communication terminal identifier management table registered with second communication terminal information according to the first embodiment of the present invention;
FIG.22 is a view showing the operation upon transmission of a group network search command in the mobile telephone according to the first embodiment of the present invention;
FIG.23 is a flowchart showing group network search command transmission processing executed at the mobile telephone according to the first embodiment of the present invention;
FIG.24 is a view showing the operation upon group network search command transmission in the communication terminal and memory card according to the first embodiment of the present invention;
FIG.25 is a flowchart showing group network search command transmission processing executed at the communication terminal and memory card according to the first embodiment of the present invention;
FIG.26 is a view showing a group network search operation in the mobile network management apparatus according to the first embodiment of the present invention;
FIG.27 is a flowchart showing group network search processing executed at the mobile network management apparatus according to the first embodiment of the present invention;
FIG.28 is a view showing a group network search results display operation and communication connection operation in the mobile telephone according to the first embodiment of the present invention;
FIG.29 is a flowchart showing group network search results display processing executed at the mobile telephone according to the first embodiment of the present invention;
FIG.30 is a flowchart showing communication connection processing executed by a mobile telephone according to the first embodiment of the present invention;
FIG.31 is a view showing a group network search results display operation and communication connection operation in the communication terminal and memory card according to the first embodiment of the present invention;
FIG.32 is a flowchart showing group network search results display processing executed at the communication terminal and memory card according to the first embodiment of the present invention;
FIG.33 is a flowchart showing communication connection processing executed at the communication terminal and memory card according to the first embodiment of the present invention;
FIG.34 is a view showing the operation upon updating communication terminal information in the communication terminal and memory card according to the first embodiment of the present invention;
FIG.35 is a flowchart showing communication terminal information update processing executed at the communication terminal and memory card according to the first embodiment of the present invention;
FIG.36 is a view showing an operation upon updating communication terminal information in mobile network management apparatus according to the first embodiment of the present invention;
FIG. 37 is a flowchart showing communication terminal information update processing executed by mobile network management apparatus according to the first embodiment of the present invention;
FIG.38 is a view showing a communication terminal identifier management table updated with communication terminal information according to the first embodiment of the present invention;
FIG.39 is a view showing a system configuration of a group network system of a second embodiment according to a second embodiment of the present invention;
FIG. 40 is a view showing an example of a communication terminal identifier generation table according to the second embodiment of the present invention;
FIG.41 is a block diagram showing an outline configuration of a memory card according to the second embodiment of the present invention;
FIG. 42 is a view showing the operation upon formation of a group network in the mobile telephone and memory card according to the second embodiment of the present invention;
FIG.43 is a flowchart of group network forming processing executed at the mobile telephone and memory card according to the second embodiment of the present invention;
FIG. 44 is a view showing an example of a communication terminal identifier generation table registered with a communication terminal identifier and a password according to the second embodiment of the present invention;
FIG. 45 is a view showing the operation upon formation of a group network in the communication terminal and memory card according to the second embodiment of the present invention;
FIG.46 is a flowchart showing group network forming processing executed at the communication terminal and memory card according to the second embodiment of the present invention;
FIG.47 is a view showing the operation upon second communication terminal information registration in mobile network management apparatus according to the second embodiment of the present invention;
FIG.48 is a flowchart showing second communication terminal information registration processing executed by mobile network management apparatus according to the second embodiment of the present invention;
FIG.49 is a view showing the operation upon communication terminal identifier verification in a mobile telephone according to the second embodiment of the present invention;
FIG. 50 is a flowchart showing communication terminal identifier verification processing executed by a mobile telephone according to the second embodiment of the present invention;
FIG.51 is a flowchart showing second communication terminal information registration processing executed by mobile network management apparatus according to the second embodiment of the present invention;
FIG.52 is a view showing a system configuration of a group network system according to a third embodiment of the present invention;
FIG.53 is a block diagram showing an outline configuration of a mobile telephone according to the third embodiment of the present invention;
FIG.54 is a block diagram showing an outline configuration of a communication terminal according to the third embodiment of the present invention;
FIG. 55 is a view showing the operation upon formation of a group network in the mobile telephone and communication terminal according to the third embodiment of the present invention;
FIG.56 is a flowchart showing group network forming processing executed at the mobile telephone and communication terminal according to the third embodiment of the present invention;
FIG.57 is a view showing a data read operation in the mobile telephone and communication terminal according to the third embodiment of the present invention;
FIG.58 is a flowchart showing data write processing executed at the mobile telephone and communication terminal according to the third embodiment of the present invention;
FIG.59 is a view showing a system configuration of a group network system of a fourth embodiment according to a fourth embodiment of the present invention;
FIG. 60 is a view showing the operation upon formation of a group network in the mobile telephone and memory card according to the fourth embodiment of the present invention;
FIG.61 is a flowchart showing group network forming processing executed at the communication terminal and memory card according to the fourth embodiment of the present invention;
FIG.62 is a view showing the operation upon second communication terminal information registration in mobile network management apparatus o according to the fourth embodiment of the present invention;
FIG.63 is a flowchart showing second communication terminal information registration processing executed by mobile network management apparatus according to the fourth embodiment of the present invention;
FIG.64 is a view showing a communication terminal identifier management table registered with second communication terminal information according to the fourth embodiment of the present invention;
FIG.65 is a view showing an example system configuration of a group network system according to another embodiment of the present invention; and
FIG.66 is a view showing an example system configuration of a group network system according to another embodiment of the present invention.

### Best Mode for Carrying Out the Invention

Embodiments of the present invention will be described below in detail with reference to the accompanying drawings.

According to the definition of group networks commonly applied in the embodiments described below, groups configured with a plurality of items of communication equipment on a network are referred to as group networks, and services managed and operated by this group network are referred to as group network services. Further, the network the first embodiment is applied to is a mobile telephone network or the Internet etc. but this is by no means limited, and this depends on the form of the network applied by the services supplied via this network. Moreover, the communication equipment this embodiment is applied to is household electrical equipment corresponding to mobile telephones and networks but the type and function of this communication equipment is by no means limited and depends on the services supplied to the communication equipment. Further, the form of groups this embodiment is applied to is individuals, friends and companies, but this form is not particularly limiting and is taken to depend on the services supplied to the group network.

### (Embodiment 1)

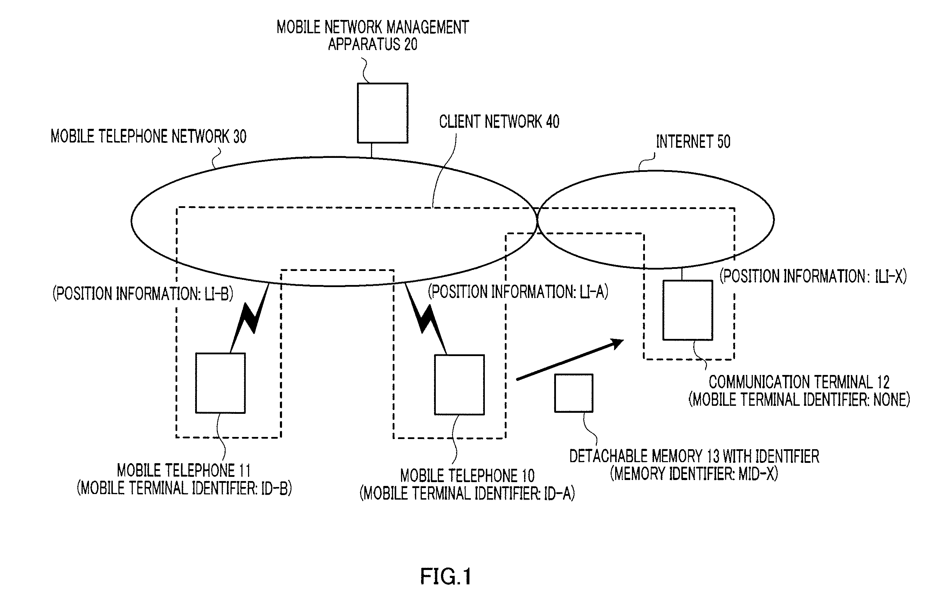

FIG. 1 shows a system configuration of a group network system to which the present embodiment is applied. In FIG.1, group network system 1 is comprised of mobile telephones 10 and 11 and mobile network management apparatus 20 housed in mobile telephone network 30, and communication terminal 12 connected to Internet 50. This group network system 1 is configured with global network 40 containing mobile telephones 10 and 11 and communication terminal 12 capable of being mutually utilized via mobile telephone network 30 and Internet 50 at the portion encompassed by the broken line in the drawing. Further, in FIG. 1, mobile telephone 10 and communication terminal 12 are capable of being connected to detachable memory card 13 with an identifier (hereinafter referred to as "memory card 13").

As shown in FIG. 1, it is taken that "ID-A" is set as a mobile terminal identifier at mobile telephone 10, "ID-B" is set as a mobile terminal identifier at mobile telephone 11, a communication terminal identifier is not set at communication terminal 12, and "MID-X" is set as a memory identifier at memory card 13. Further, position information for mobile telephone 10 is taken to be "LI-A, " position information for mobile telephone 11 is taken to be "LI-B," and position information for communication terminal 12 is taken to be "ILI-X." In this embodiment, a description is given of the case of utilizing a secure memory card such as a smartSD (trademark) as memory card 13, but the type and function etc. of this memory card is by no means limited, and any memory card capable of securely storing identification information etc. is appropriate.

Communication terminal 12 is a household appliance (for example, a television tuner etc.) or a personal computer etc. that is connected to Internet 50, has a communication function for carrying out data processing, and is located in a house. Communication terminal 12 does not have to be of a form connecting directly to Internet 50, and may also be of a form connected to Internet 50 via another network (for example, a home network, a local network, a personal network, etc.) using a gateway etc. (not shown).

With group network system 1 of FIG.1, the case is shown where two mobile telephones 10 and 11 and one communication terminal 12 are connected but the number of items connected is not particularly limited.

Mobile telephone 10 and communication terminal 12 are both capable of being connected with memory card 13. In this embodiment, one memory card 13 is shared between mobile telephone 10 and communication terminal 12. Memory card 13 is equipped with an anti-tamper module that is resistant to reverse actions such as disassembly and analysis etc. and large capacity non-volatile memory, and is capable of securely storing identification information etc. in part of the non-volatile memory using a program stored in the anti-tamper module.

In this embodiment, key information consisting of a public key, private key, and certificate is stored in non-volatile memory as a memory identifier (MID-X) based on RSA (Rivest Shamir Aldeman), and a program for executing access authentication to the key information and a program for executing public key encryption and digital signatures based on PKI (Public Key Infrastructure) are stored in the non-tamper module. In this embodiment, a description is given of the case where the identification information and programs are stored as described above but this is by no means limited to this identification information and type of program and any item that can be used as a memory identifier that is capable of safe storage can be used.

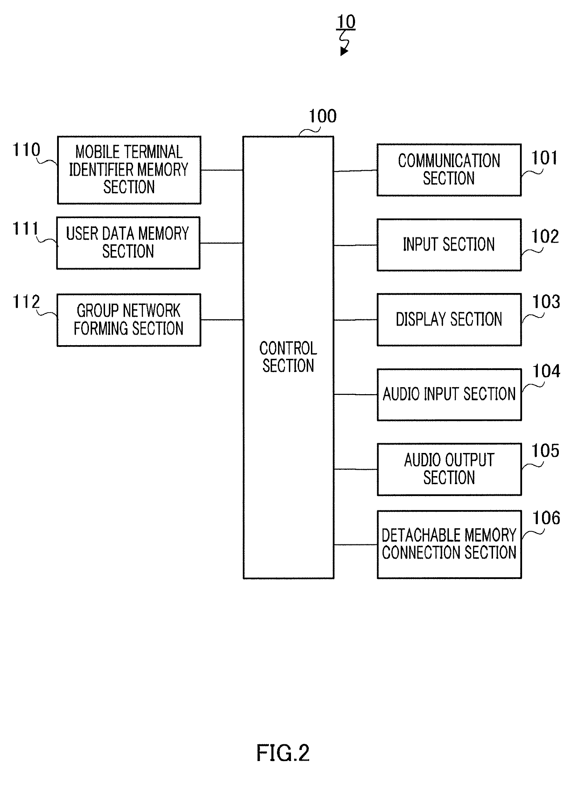

FIG.2 is a block diagram showing an outline configuration of mobile telephone 10. In FIG.2, mobile telephone 10 is comprised of control section 100, communication section 101, input section 102, display section 103, audio input section 104, audio output section 105, detachable memory connection section 106, mobile terminal identifier memory section 110, user data memory section 111 and group network forming section 112. Mobile telephone 11 has the same configuration as mobile telephone 10, with the exception of detachable memory connection section 106 of FIG.2.

Control section 100 is comprised of a CPU (Central Processing Unit) (not shown), ROM (Read Only Memory), and RAM (Random Access Memory) etc., controls communication section 101 based on a mobile communication program stored in ROM, controls the mobile communication steps with which call requests and data communication requests are transmitted to mobile network management apparatus 20 and controls the mobile communication steps according to call and data communication after call connection.

Further, control section 100 executes processing to control communication section 101 and transmit a memory identifier stored in memory card 13 connected to detachable memory connection section 106 to mobile network management apparatus 20 as a first communication terminal information registration request during forming of group network 40.

Communication section 101 has a mobile communication function for connecting in a wireless manner to a wireless base station (not shown in the drawings) arranged at mobile telephone network 30, executes a mobile communication step transmitting call requests and data communication requests to mobile network management apparatus 20 under the control of control section 100, executes a mobile communication step according to calls and data communication after call connection, and executes a call step etc. transmitting a first communication terminal information registration request to mobile network management apparatus 20.

Input section 102 is constructed from a numeric key pad and various function keys, and outputs a key operation signal for transmitting and receiving inputted by the user and a designation signal etc. for making the group network to control section 100. Display section 103 is configured with a liquid crystal display section etc., and displays key operation information upon transmitting and receiving and received data under the control of control section 100.

Audio input section 104 is constructed from a microphone and converts a call voice inputted by a user upon a call to an audio signal for output to control section 100. Audio output section 105 is constructed from a speaker, and converts a received call audio signal inputted by the control section upon a call to a received voice signal for output.

Detachable memory connection section 106 has a memory I/F function for connecting memory card 13 in a detachable manner, and executes read processing and information storage processing for information for memory card 13, according to information read commands and information storage commands from control section 100.

Mobile terminal identifier memory section 110 executes processing for reading a mobile terminal identifier unique for mobile telephone 10 under the control of control section 100. User data memory section 111 executes read processing and storage processing for individual access ID information (user ID, password, etc.) for the user of mobile telephone 10 under the control of control section 100.

Group network forming section 112 receives a group network forming command inputted from input section 102 via control section 100, reads out a memory identifier stored in memory card 13, and executes group network forming processing to transmit the first communication terminal information registration request from communication section 101 to mobile network management apparatus 20 via control section 100.

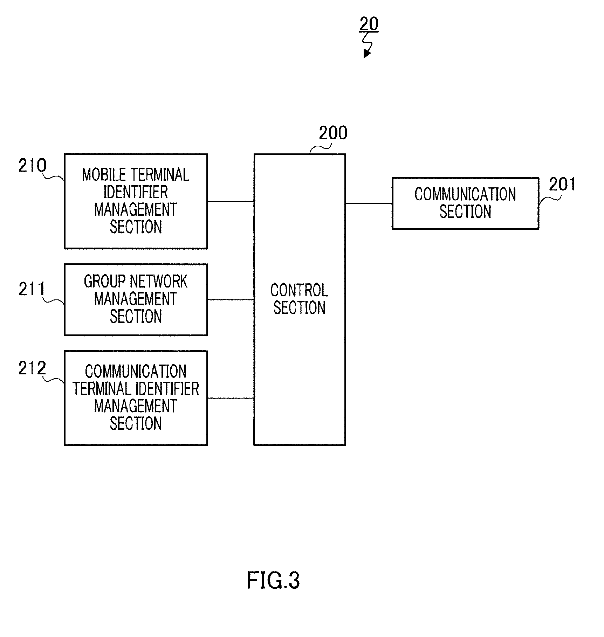

FIG.3 is a block diagram showing an outline configuration of mobile network management apparatus 20. In FIG.3, mobile network management apparatus 20 is comprised of control section 200, communication section 201, mobile terminal identifier management section 210, group network management section 211, and communication terminal identifier management section 212.

Control section 200 is constructed from a CPU, ROM and RAM etc. (not shown), controls communication section 201 based on a mobile communication program stored in ROM, and controls a mobile communication step according to a call request and data communication request from mobile telephones 10 and 11.

Further, control section 200 carries out authentication processing for memory identifiers contained in the first communication terminal information registration request upon receipt of the first communication terminal information registration request, and registers the received memory identifiers in group network management section 211 and communication terminal identifier management section 212.

Communication section 201 has a communication I/F function connecting with mobile telephone network 30, executes mobile communication steps according to call requests and data requests with mobile telephone 10 under the control of control section 200, and receives communication terminal identifiers in accordance with mobile communication steps upon receipt of the first communication terminal information registration request.

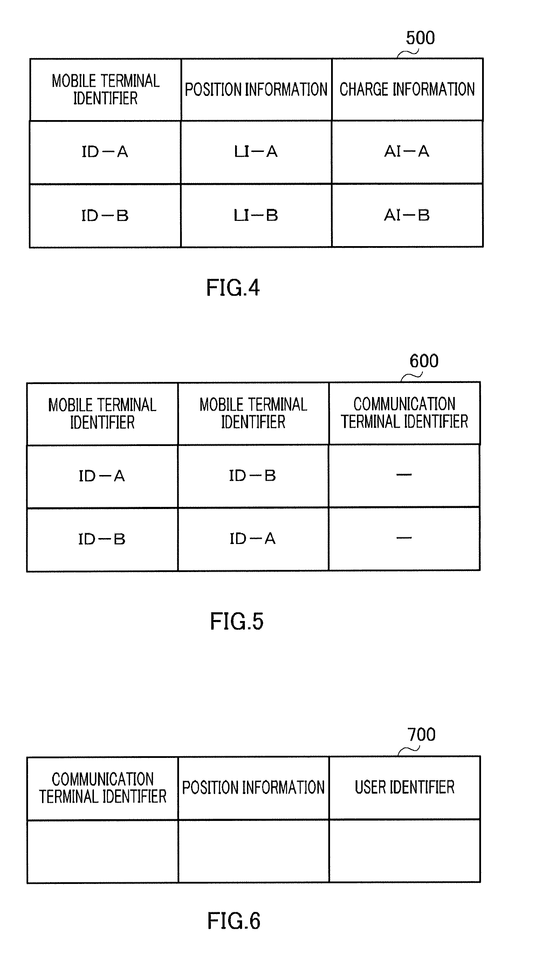

Mobile terminal identifier management section 210 manages mobile terminal identifier management table 500 shown in FIG.4. "Mobile terminal identifier," "position information," and "charging information" for mobile telephones 10 and 11 are stored in association with each other in mobile terminal identifier management table 500. Mobile terminal identifier management section 210 associates and stores mobile terminal identification information and position information for mobile telephones 10 and 11 inputted from control section 200 in mobile terminal identifier management table 500 and stores charging information relating to calls and data communication etc. for mobile telephones 10 and 11.

A description is given with this embodiment where, in mobile terminal identifier management table 500, "position information" and "charge information" are taken as information stored in association with "mobile terminal identifier," but this information is by no means limited, and any item that may be managed so as to be associated with "mobile terminal identifier" upon providing of a service such as calls or data communication can be used.

Group network management section 211 manages group network management table 600 shown in FIG.5. "Mobile terminal identifiers" of mobile telephones 10 and 11 belonging to the group network and "communication terminal identifier" of communication terminal 12 are stored in association with each other in group network management table 600. Group network management section 211 stores a memory identifier received from mobile telephone 10 inputted from control section 200 upon group network forming in a manner correlating with mobile terminal identifier of mobile telephone 10 in group network management table 600.

In this embodiment, a description is given of the case of managing "mobile terminal identifier" and "communication terminal identifier" lined up in a manner correlated with a certain "mobile terminal identifier" as the format for the table of group network management table 600 but this table format is not limiting, and any format capable of managing a group network is possible.

Communication terminal identifier management section 212 manages communication terminal identifier management table 700 shown in FIG.6. "Communication terminal identifier" of communication terminal 12, "position information," and "user identifier" enabling the user to easily distinguish the communication terminal identifier are stored in association with each other at communication terminal identifier management table 700. Communication terminal identifier management section 212 stores a communication terminal identifier received from mobile telephone 10 inputted from control section 200 and a user identifier in association with each other in communication terminal identifier management table 700, and stores position information received from communication terminal 12 in association with these in communication terminal identifier management table 700. In this embodiment, a memory identifier is used as the communication terminal identifier and a name identifying memory card 13 is used as a user identifier. Further, position information may be any information enabling unique access to this communication terminal from another communication terminal routing information such as an IP address, URL (Uniform Resource Locator), port number or telephone number, or identification information etc. for a communication terminal or gateway housing a communication terminal.

A description is given with this embodiment where, at communication terminal identifier management table 700, "position information" and "user identifier" are taken as information stored in association with "communication terminal identifier," but this information is by no means limited, and any item that may be managed so as to be associated with "communication terminal identifier" upon providing of a group network service can be used. This information may include, for example, communication terminal capability information (communication terminal type, functions, etc.), communication terminal QoS (Quality of Service) information (bandwidth every communication terminal or every provided service, priority information, etc.), communication terminal presence information (communication terminal state, presence etc.), and communication terminal security information (access ID for accessing communication terminal, password, step etc.).

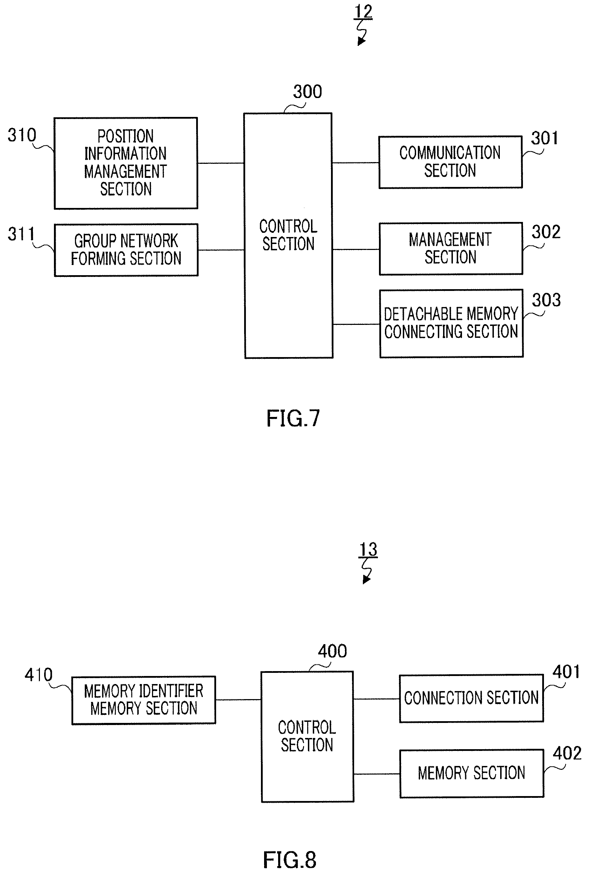

FIG.7 is a block diagram showing an outline of a configuration of communication terminal 12. In FIG.7, communication terminal 12 is configured with control section 300, communication section 301, processing section 302, detachable memory connecting section 303, position information management section 310, and group network forming section 311.

Control section 300 is constructed from a CPU, ROM and RAM etc. (not shown), controls communication section 301 based on a communication terminal control program stored in ROM, and controls the communication step related to data communication with mobile network management apparatus 20.

Further, upon formation of group network 40, control section 300 executes processing to control communication section 301 and transmit position information stored in position information management section 310 and data stored in memory card 13 connected to detachable memory connecting section 303 to mobile network management apparatus 20 as a second communication terminal information registration request.

Communication section 301 has a communication I/F function connecting with Internet 50, executes secure communication steps relating to data communication etc. with mobile network management apparatus 20 under the control of control section 300, and executes call steps etc. transmitting the second communication terminal information registration request to mobile network management apparatus 20 in accordance with communication steps during forming of the group network.

Processing section 302 executes processing as a household appliance based on an application for household appliance use stored in the ROM of control section 300.

Detachable memory connection section 303 has a memory I/F function connecting memory card 13 in a detachable manner, and executes read processing and information storage processing for information for memory card 13 according to information read commands and information storage commands from control section 300.

Position information management section 310 stores and manages position information of communication terminal 12. In this embodiment, a description is given of the case where position information is already stored but this case is by no means limited, and in the case of using, for example, a gateway, etc., this position information maybe acquired from a home gateway (not shown) using UPnP (Universal Plug and Play) protocol, etc.

Upon receiving that memory card 13 is connected to detachable memory connecting section 303 and that the data is stored in memory card 13, group network forming section 311 reads out position information stored in position information management section 310, and executes group network forming processing to transmit a second communication terminal information registration request contained in this information from communication section 301, via control section 300, to mobile network management apparatus 20.

FIG.8 is a block diagram showing an outline configuration of memory card 13. In FIG.8, memory card 13 is configured with control section 400, connection section 401, memory section 402, and memory identifier memory section 410.

Control section 400 is configured with a CPU etc., and controls read operations and information storage operations for information with respect to the memory section 402 and memory identifier memory section 410 according to information read commands and information storage commands from mobile telephone 10 and communication terminal 12 inputted from connection section 401.

Connection section 401 is equipped with a connection mechanism for connecting detachable memory connection section 106 mobile telephone 10 is provided with and the detachable memory connecting section 303 communication terminal 12 is provided with, so as to exchange data between mobile telephone 10 and communication terminal 12 when memory card 13 is connected to detachable memory connection section 106 or detachable memory connecting section 303.

Memory section 402 stores various access ID information and position information etc. received from mobile network management apparatus 20 via user data memory section 111 of mobile telephone 10 and mobile telephone 10.

Memory identifier memory section 410 stores key information comprised of a public key, private key, and certificate based on RSA as a memory identifier (MID-X), a program executing access authentication to the key information, and a program executing public key encryption and digital signatures based on PKI. Information stored in memory identifier memory section 410 restricts access from connected mobile telephone 10 and communication terminal 12.

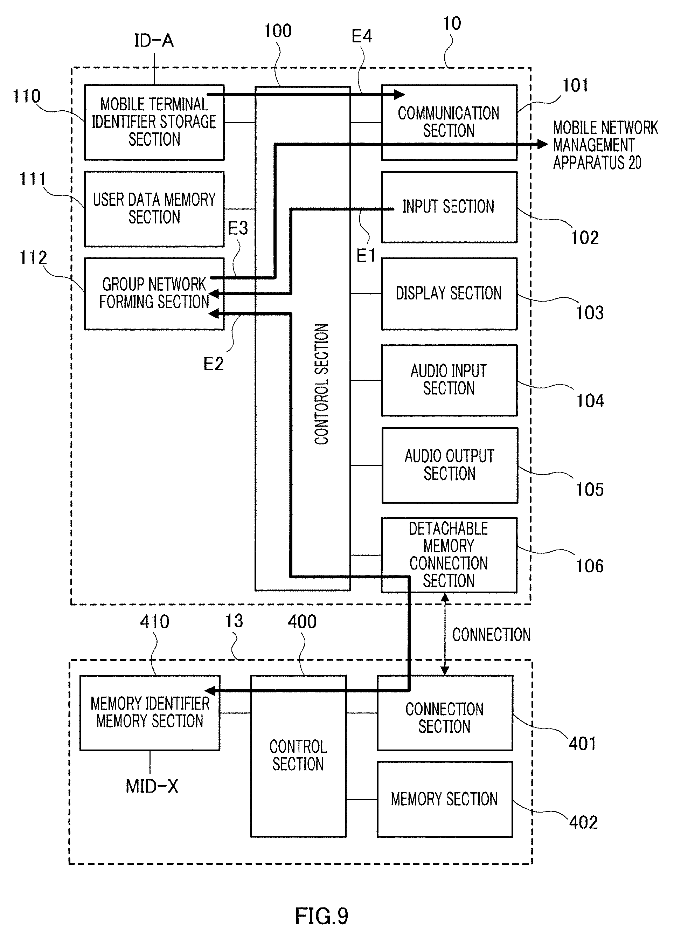

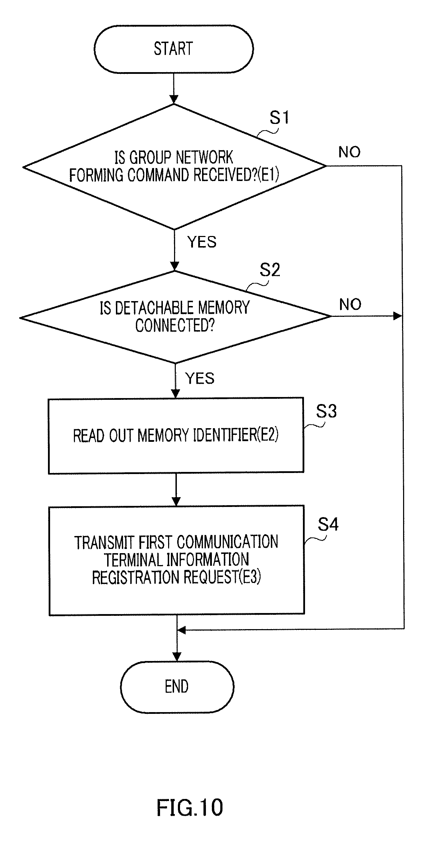

Next, a description is given with reference to FIG.9 and FIG.10 regarding processing when mobile telephone 10 forms a group network. FIG.9 is a view showing operation upon formation of a group network in mobile telephone 10 and memory card 13, and FIG.10 is a flowchart of processing for forming a group network executed at mobile telephone 10 and memory card 13.

Before execution of this group network forming processing, as shown in FIG.4, mobile terminal identifiers for mobile telephones 10 and 11 belonging to group network 40 shown in FIG.1 are already registered in mobile terminal identifier management table 500 managed by mobile terminal identifier management section 210 of mobile network management apparatus 20, and mobile terminal identifiers of mobile telephones 10 and 11 belonging to group network 40 shown in FIG.5 are already registered in group network management table 600 managed by group network management section 211.

In FIG.9 and FIG.10, mobile telephone 10 starts a group network forming operation when a group network forming command is inputted from input section 102 of mobile telephone 10. In this embodiment, a description is given of the case where a group network forming command is inputted to input section 102 but the inputted block is by no means limited in this respect and any block that can receive group network forming commands may be adopted.

When a group network forming command is inputted from input section 102 (E1), control section 100 in mobile telephone 10 determines whether or not this command is a group network forming command (step S1). When it is determined that the command is not a group network forming command (step S1: "NO"), control section 100 finishes this processing. When it is determined that the command is a group network forming command (step S1: "YES"), control section 100 outputs a group network forming command to group network forming section 112.

Next, control section 100 confirms that memory card 13 is connected to detachable memory connection section 106 (step S2), and, if memory card 13 is not connected (step S2: "NO"), finishes this processing. Further, when it is confirmed that memory card 13 is connected (step S2: "YES"), control section 100 outputs a memory identifier read command to memory card 13 via detachable memory connection section 106 (E2) (step S3) . When the memory identifier read command is received from connection section 401, control section 400 in memory card 13 reads out the public key and certificate for the memory identifier (MID-X) stored in memory identifier memory section 410 and outputs this from connection section 401 to mobile telephone 10. Control section 100 of mobile telephone 10 receives the public key and certificate of memory identifier (MID-X) from detachable memory connection section 106 and reports these to group network forming section 112 (E2).

In this embodiment, a description is given of the case where a public key and certificate of memory identifier (MID-X) are used as the registered memory identifier, but this is by no means limited, and any information capable of uniquely identifying the memory identifier (MID-X) such as a digital signature etc. may be adopted.

When a group network forming command and REPORT of receipt of a memory identifier (MID-X) are inputted, group network forming section 112 outputs a first communication terminal information registration request containing the received memory identifier (MID-X) to control section 100. A public key and certificate for memory identifier (MID-X) and a user identifier (PID-X) are contained in the first communication terminal information registration request. When the first communication terminal information registration request is inputted, control section 100 transmits the first communication terminal information registration request from communication section 101 to mobile network management apparatus 20 (E3) (step S4), and finishes this processing. In this embodiment, a description is given of the case of using a user identifier as information transmitted together with the public key and certificate of the memory identifier upon transmission of the first communication terminal information registration request, but this information is by no means limited in this respect, and any information registered in communication terminal identifier management table 700 may be adopted.

Communication section 101 establishes a secure channel with mobile network management apparatus 20 upon transmission of the first communication terminal information registration request using mobile terminal identifier (ID-A) of mobile terminal identifier memory section 110 based on the mobile communication step (E4). At mobile network management apparatus 20, mobile terminal identifier (ID-A) is used in client authentication of mobile telephone 10. As a result, a secure channel is established with mobile network management apparatus 20, and by using this channel it is possible to securely transmit the first communication terminal information registration request.

In the event that server authentication of mobile network management apparatus 20 is necessary, the public key and certificate of mobile network management apparatus 20 may be requested in accordance with an authentication method such as PKI etc., and, after this, this authentication processing may be carried out. At this time, the public key and certificate of mobile network management apparatus 20 are outputted to control section 100 and control section 100 reports group network forming section 112 of the inputted public key and certificate of mobile network management apparatus 20.

In this embodiment, a description is given using a mobile terminal identifier based on a mobile communication step as client authentication but this method is by no means limited in this respect and any method capable of authenticating mobile telephone 10 from mobile network management apparatus 20 such as the case of using individual access ID information stored in user data memory section 111 or the case of using an authentication method such as PKI etc. may be adopted.

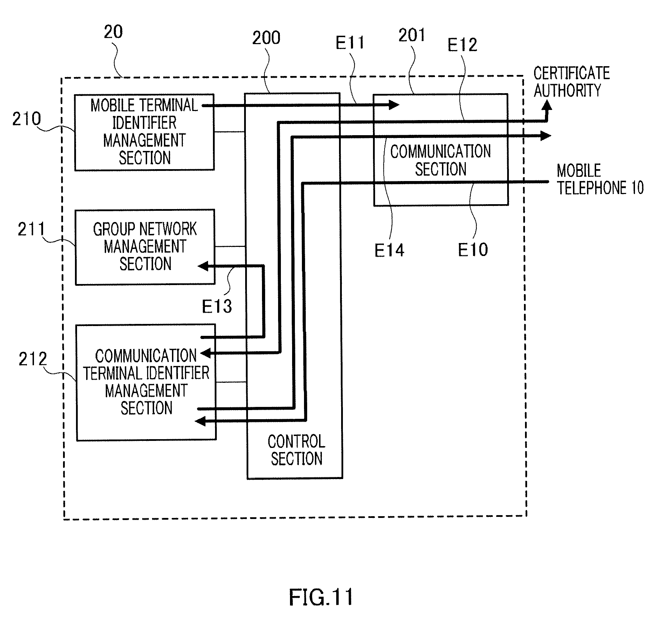

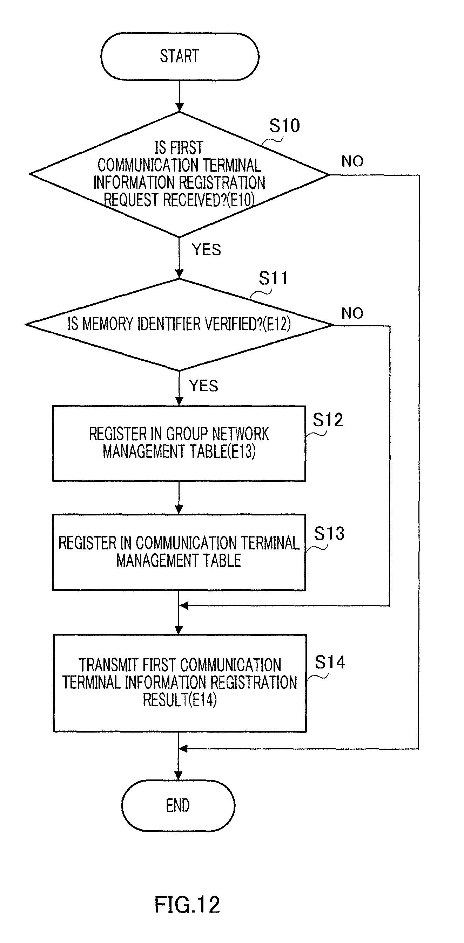

Next, a description is given with reference to FIG.11 and FIG.12 of first terminal information registration processing executed by mobile network management apparatus 20 receiving the first communication terminal information registration request. FIG.11 is a view showing a first communication terminal information registration operation of mobile network management apparatus 20, and FIG.12 is a flowchart showing first communication terminal information registration processing executed at mobile network management apparatus 20.

In FIG.11 and FIG.12, control section 200 of mobile network management apparatus 20 checks the presence or absence of receipt of a first communication terminal information registration request from communication section 201 (E10) (step S10), and, if the first communication terminal information registration request is not received (step S10 : "NO"), finishes this processing. Further, when receipt of the first communication terminal information registration request is confirmed (step S10: "NO"), control section 200 reports to communication terminal identifier management section 212 the first communication terminal information registration request and mobile terminal identifier (ID-A) of mobile telephone 10 of the transmission source .

Communication section 201 establishes a secure channel with mobile telephone 10 upon receipt of the first communication terminal information registration request using mobile terminal identifier (ID-A) of mobile telephone 10 constituting the transmission source based on the mobile communication step (E11). At mobile network management apparatus 20, mobile terminal identifier (ID-A) is used in client authentication of mobile telephone 10. As a result, a secure channel is established with mobile telephone 10, and by using this channel it is possible to receive the first communication terminal information registration request securely.

In the event that a public key and certificate for mobile network management apparatus 20 is taken as server authentication, the public key, certificate, and digital signature of mobile network management apparatus 20 may be transmitted to mobile telephone 10 in accordance with an authentication method such as PKI etc.

Next, control section 200 reads out the public key and certificate of memory identifier (MID-X) contained in the received first communication terminal information registration request and carries out authentication of the memory identifier (MID-X) in accordance with PKI (step S11). At this time, in the event that the authentication information is insufficient, an authentication information acquisition request is transmitted from communication section 201 to an external CA (Certificate Authority), and authentication may then be carried out based on the authentication information transmitted from the CA (E12). In the event that the authentication results are "OK" (step S11: "YES"), control section 200 outputs the received first communication terminal information registration command to communication terminal identifier management section 212 (E12) (step S12). At this time, in conjunction with the registration command, the mobile terminal identifier (ID-A) of mobile telephone 10 of the transmission source is also outputted to communication terminal identifier management section 212.

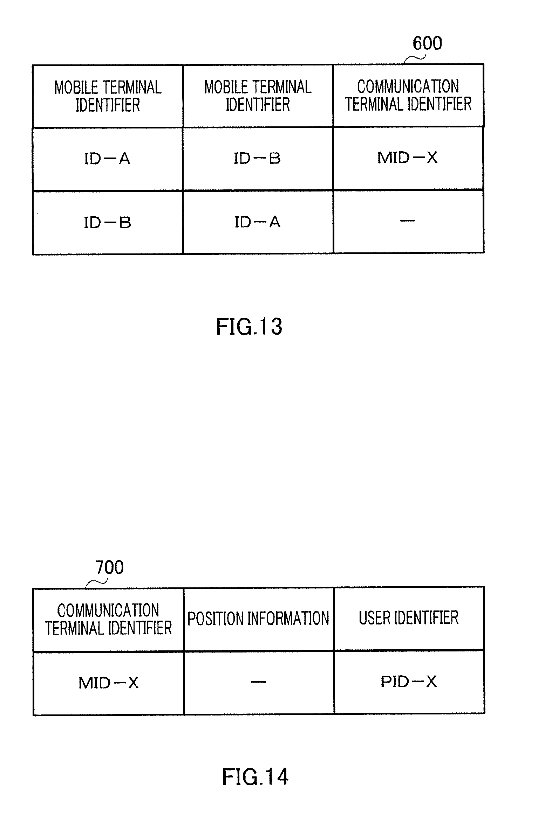

When a registration command is received, communication terminal identifier management section 212 registers the first communication terminal information containing the reported memory identifier (MID-X) as an entry for mobile terminal identifier (ID-A) of group network management table 600 managed by group network management section 211 (E13). As a result of this registration operation, as shown in FIG.13, memory identifier (MID-X) is registered in the "communication terminal identifier" column corresponding to mobile telephone 10 at group network management table 600. In the event that memory identifier (MID-X) is already registered in group network management table 600, this memory identifier (MID-X) may be deleted or the memory information registration results (registration NG) may be transmitted from communication section 201 to mobile telephone 10 without registration, and this processing may be finished.

When registration processing for group network management table 600 is finished, communication terminal identifier management section 212 registers memory identifier (MID-X) and user identifier (PID-X) in communication terminal identifier management table 700 (step S13). As a result of this registration operation, as shown in FIG. 14, an entry for a new memory card 13 is registered in communication terminal identifier management table 700, and user identifier (PID-X) is registeredinthecorresponding"useridentifier"column. In the event that an entry for memory identifier (MID-X) is already registered in communication terminal identifier management table 700, this entrymaybe deleted, or the memory information registration results (registration NG) may be transmitted from communication section 201 to mobile telephone 10 without registration, and this processing may be finished.

When registration processing for communication terminal identifier management table 700 is finished, communication terminal identifier management section 212 reports the registration result (registration OK) to control section 200. Upon report of the registration result (registration OK), control section 200 transmits the first communication terminal information registration result (registration OK) from communication section 201 to mobile telephone 10 (E14) (step S14), and finishes this processing. A public key and certificate for mobile network management apparatus 20, position information for mobile network management apparatus 20, and registration access ID information (ID, password, etc.) used upon registration from communication terminal 12 are contained in the first communication terminal information registration result.

In this embodiment, a description is given of the case where the above information is taken as information included in the first communication terminal information registration results, but this information is by no means limited in this respect, and information and programs used upon registration from communication terminal 12 (registration of second communication terminal information) may also be adopted.

Further, in the event that the authentication results are NG in step S11 (step S11: "NO"), control section 200 proceeds to step S14 without registering the first communication terminal information, transmits the first communication terminal information registration results (registration NG) from communication section 201 to mobile telephone 10 (E14) (step S14), and finishes this processing.

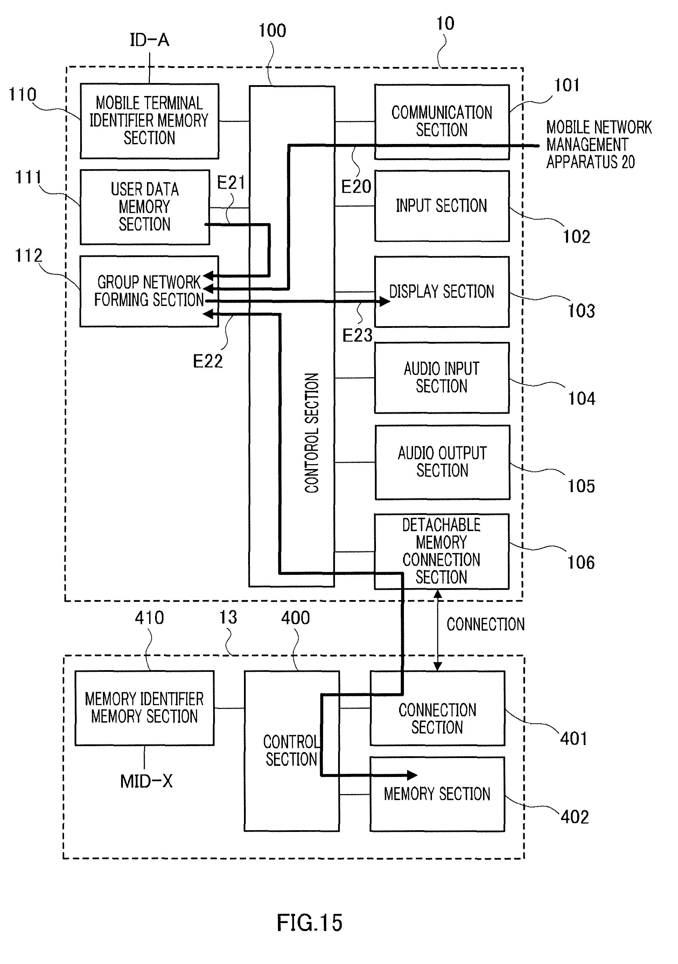

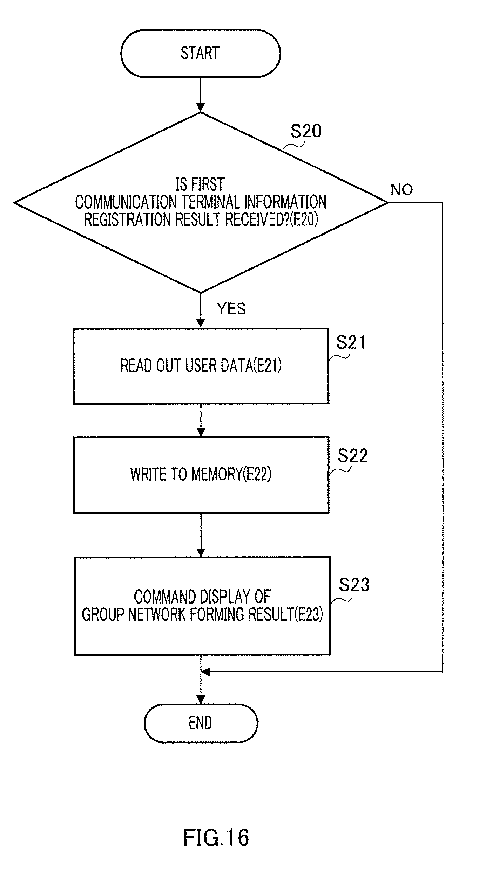

Next, a description is given with reference to FIG.15 and FIG.16 of processing of writing data in memory card 13 executed at mobile telephone 10 upon receipt of the first communication terminal information registration result. FIG.15 is a view showing a data write operation in mobile telephone 10 and in memory card 13, and FIG. 16 is a flowchart showing data write processing executed at mobile telephone 10 and memory card 13.

In FIG.15 and FIG.16, control section 100 of mobile telephone 10 checks the presence or absence of receipt of the first communication terminal information registration result by communication section 101 (step S20), and, in the event that first communication terminal information registration result is not received (step S20: "NO"), finishes this processing. Further, when the first communication terminal information registration results are received (step S20: "YES"), control section 100 reports the first communication terminal information registration result (E20) to group network forming section 112.

When the first communication terminal information registration results are confirmed, group network forming section 112 reads out individual access ID information from user data memory section 111 (E21) (step S21), and outputs the individual access ID information, public key and certificate for mobile network management apparatus 20 contained in the first communication terminal information registration results, position information for mobile network management apparatus 20, registration access ID information, and an command to write the group network forming request command to memory card 13, to memory card 13 via control section 100 and detachable memory connection section 106 (E22) (step S22). When the data and write command are received from connection section 401, control section 400 in memory card 13 stores the data in memory section 402. In this embodiment, a description is given of the case where the above information is taken as information written to memory card 13, but this information is by no means limited in this respect, and information and programs used upon registration from communication terminal 12 (registration of second communication terminal information) may also be adopted.

Next, group network forming section 112 outputs a display command for the first communication terminal information registration results to control section 100. Control section 100 receives the display command for the first communication terminal information registration results, displays the first communication terminal information registration results at display section 103 (E23) (step S23) and finishes this processing.

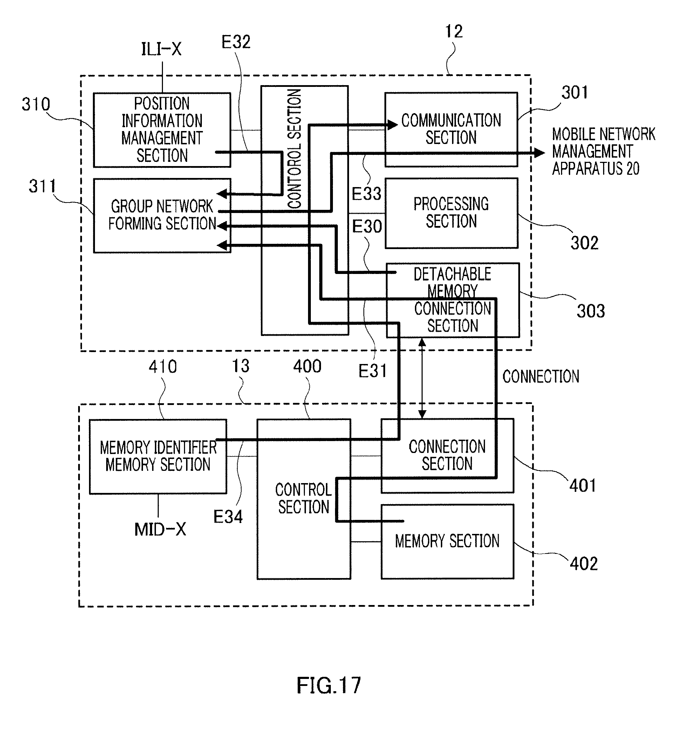

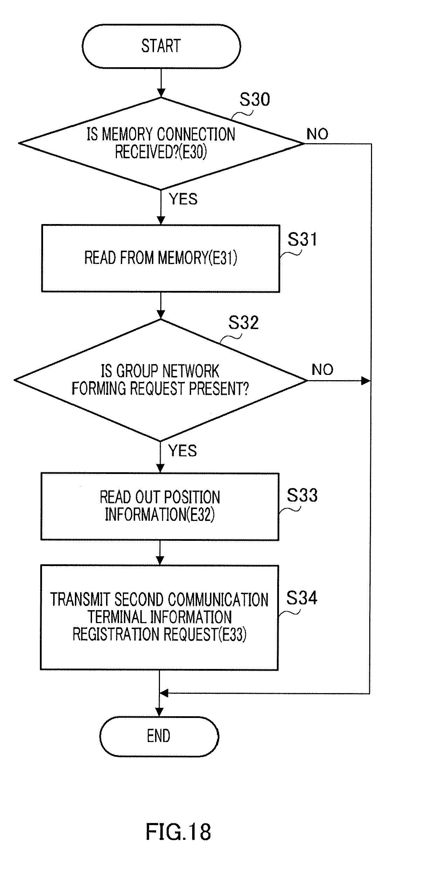

Next, a description is given with reference to FIG.17 and FIG.18 of group network forming processing executed at communication terminal 12 when memory card 13 the data is written to at mobile telephone 10, is taken out by a user and connected to communication terminal 12. FIG.17 is a view showing operation upon formation of a group network in communication terminal 12 and memory card 13, and FIG.18 is a flowchart showing processing for forming a group network executed at communication terminal 12 and memory card 13.

In FIG.17 and FIG.18, control section 300 in communication terminal 12 checks the presence or absence of a memory card connection signal inputted from detachable memory connecting section 303 in communication terminal 12 (E30) (step S30). When a memory card connection signal is inputted (step S30: "YES"), control section 300 transmits a data read command to memory card 13 (E31) (step S31). Further, when a memory card connection signal is not inputted (step S30: "NO"), control section 300 finishes this processing. In this embodiment, a description is given of the case where the memory card connection signal is inputted from detachable memory connecting section 303, but the inputting block is by no means limited, and any block capable of receiving a memory card connection signal is appropriate.

When a data read command is received, control section 400 in memory card 13 reads out data from memory section 402 and transmits this data to communication terminal 12 (E31).

When data is received frommemory card 13, control section 300 checks the presence or absence of a group network forming request command for this data (step S32). If there is no group network forming request command (step S32: "NO"), control section 300 finishes this processing. Further, if a group network forming request command is present (step S32: "YES"), control section 300 reports the group network forming request command to group network forming section 311. The presence or absence of a group network forming request command may be checked at control section 400 before data is transmitted to communication terminal 12.

Next, when report of a group network forming request command is received, group network forming section 311 reads position information (ILI-X) from position information management section 310 (E32) (step S33), and outputs a second communication terminal information registration command containing position information (ILI-X) to control section 300 (E33). When position information and a second communication terminal information registration command are received, control section 300 transmits this position information (ILI-X) and the second communication terminal information registration request from communication section 301 to mobile network management apparatus 20 (E33) (step S34), and finishes this processing. In this embodiment, a description is given of transmitting position information upon transmission of the communication terminal information registration request but this information is by no means limited in the respect, and any information that can be registered at communication terminal identifier management table 700 may be adopted.

Communication section 301 establishes a secure channel with mobile network management apparatus 20 using memory identifier (MID-X) of memory identifier memory section 410 in memory card 13 based on PKI upon transmission of the second communication terminal information registration request. After establishment, individual access ID information and registration access ID information is read out from memory section 402 and transmitted to mobile network management apparatus 20. At mobile network management apparatus 20, this information is used in client authentication of communication terminal 12. As a result, a secure channel is established with mobile network management apparatus 20, and, by using this channel, it is possible to transmit the second communication terminal information registration request securely.

In the event that server authentication of mobile network management apparatus 20 is necessary, the public key and certificate for mobile network management apparatus 20 are requested in accordance with an authentication method such as PKI etc. After receipt, this authentication processing may be carried out or authentication processing may be carried out by comparing the received data with the public key and certificate of mobile network management apparatus 20 read out from memory section 402. In the event of comparison with information for memory section 402, at communication terminal 12, it is possible to reduce processing as a result of making communication with an external authentication authority etc. no longer necessary. Upon transmission to mobile network management apparatus 20, position information for mobile network management apparatus 20 read out from memory section 402 can be used as the destination.

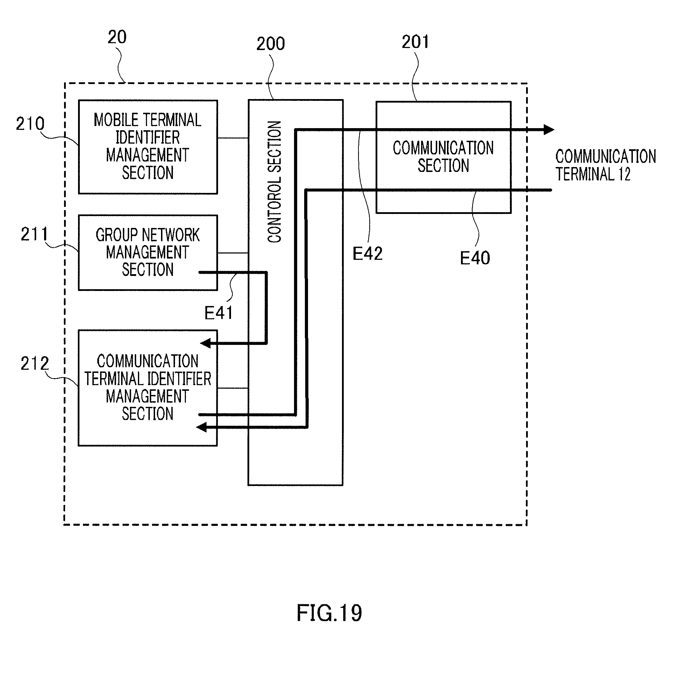

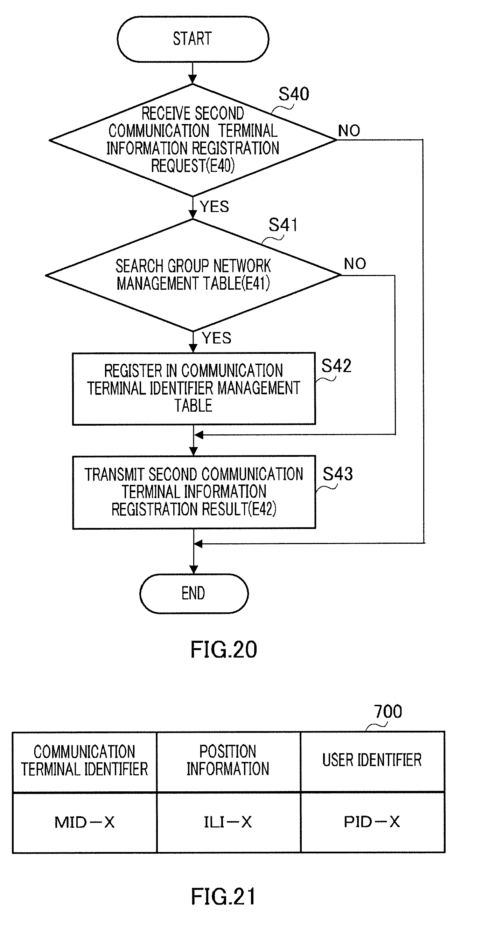

Next, a description is given with reference to FIG.19 and FIG.20 of second terminal information registration processing executed by mobile network management apparatus 20 receiving the second communication terminal information registration request. FIG.19 is a view showing the operation upon second communication terminal information registration of mobile network management apparatus 20, and FIG.20 is a flowchart showing second communication terminal information registration processing executed at mobile network management apparatus 20.

In FIG.19 and FIG.20, control section 200 of mobile network management apparatus 20 checks the presence or absence of the receipt of a second communication terminal information registration request from communication section 201 (E40) (step S40), and, if the second communication terminal information registration request is not received (step S40: "NO"), finishes this processing. Further, when receipt of the second communication terminal information registration request is confirmed (step S40: "YES"), control section 200 searches group network management table 600 of group network management section 211, and checks the presence or absence of registration of memory identifier (MID-X) of communication terminal 12 of the transmission source (E41) (step S41).

Upon receipt of the second communication terminal information registration request, based on PKI, communication section 201 establishes a secure channel with communication terminal 12 using memory identifier (MID-X) of communication terminal 12 of the transmission source. At mobile network management apparatus 20, memory identifier (MID-X) is used in client authentication of communication terminal 12. As a result, a secure channel is established with communication terminal 12, and, by using this channel, it is possible to receive the second communication terminal information registration request securely.

In the event that a public key and certificate for mobile network management apparatus 20 are taken as server authentication, the public key, certificate, and digital signature of mobile network management apparatus 20 may be transmitted to communication terminal 12 in accordance with an authentication method such as PKI.

Next, in the event that the memory identifier is registered in group network management table 600 (step S41: "YES"), control section 200 registers the received position information (ILI-X) in communication terminal identifier management table 700 of communication terminal identifier management section 212 (step S42). As a result of this registration operation, as shown in FIG.21, position information (ILI-X) is registered in the "position information" column corresponding to communication terminal 12 at communication terminal identifier management table 700.

Next, control section 200 transmits the second communication terminal information registration results (registration OK) from communication section 201 to communication terminal 12 (E42) (step S43) and finishes this processing. Further, in the event that the memory identifier is not registered in group network management table 600 (step S41: "NO"), control section 200 proceeds to step S43 without registering the position information, transmits the second communication terminal information registration results (registration NG) from communication section 201 to communication terminal 12 (E42) (step S43), and finishes this processing.

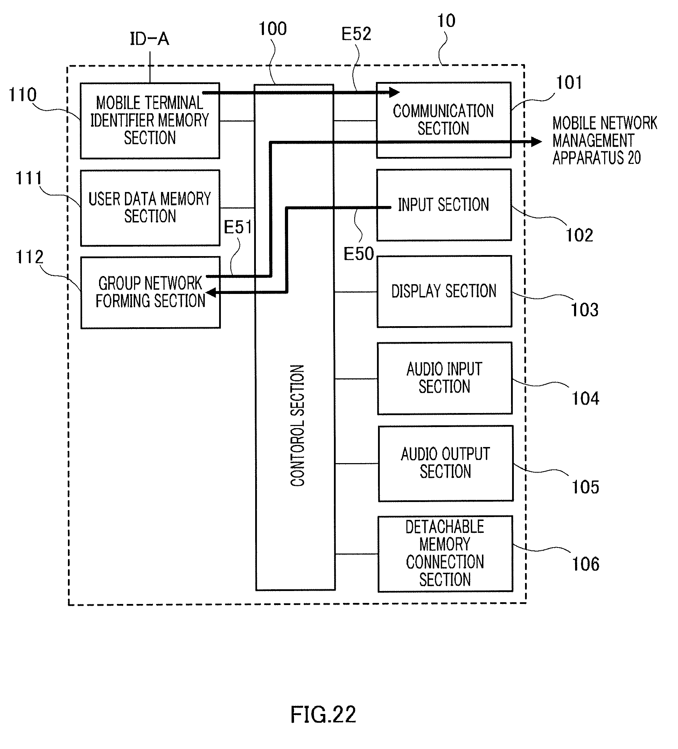

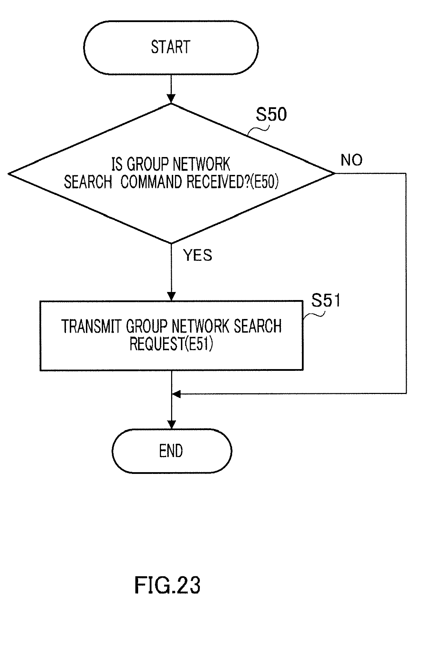

Next, transmission processing for a group network search command executed at mobile telephone 10 when a user searches for a communication terminal belonging to group network 40 from mobile telephone 10 is described with reference to FIG.22 and FIG.23. FIG.22 is a view showing the operation upon transmission of a group network search command in mobile telephone 10, and FIG.23 is a flowchart showing group network search command transmission processing executed at mobile telephone 10.

In FIG.22 and FIG.23, control section 100 in mobile telephone 10 checks the presence or absence of the receipt of a group network search command inputted from input section 102 by the user (E50) (step S50). If a group network search command is not received (step S50: "NO"), control section 100 finishes this processing, and, in the event that a group network search command is received (step S50: "YES"), reports the receipt to group network forming section 112.

In this embodiment, a description is given of the case where a group network search command is inputted to an input section but the inputted block is by no means limited in this respect and any block that can receive group network search commands may be adopted.

When report of receipt of a group network search command is received, group network forming section 112 outputs a group network search command to control section 100. Control section 100 receives the group network search command, transmits a group network search request from communication section 101 to mobile network management apparatus 20 (E51) (step S51), and finishes this processing. As with upon transmission of the first communication terminal information registration request, communication section 101 establishes a secure channel with mobile network management apparatus 20 using mobile terminal identifier (ID-A) of mobile terminal identifier memory section 110 (E52), and uses this channel to transmit group network search requests securely.

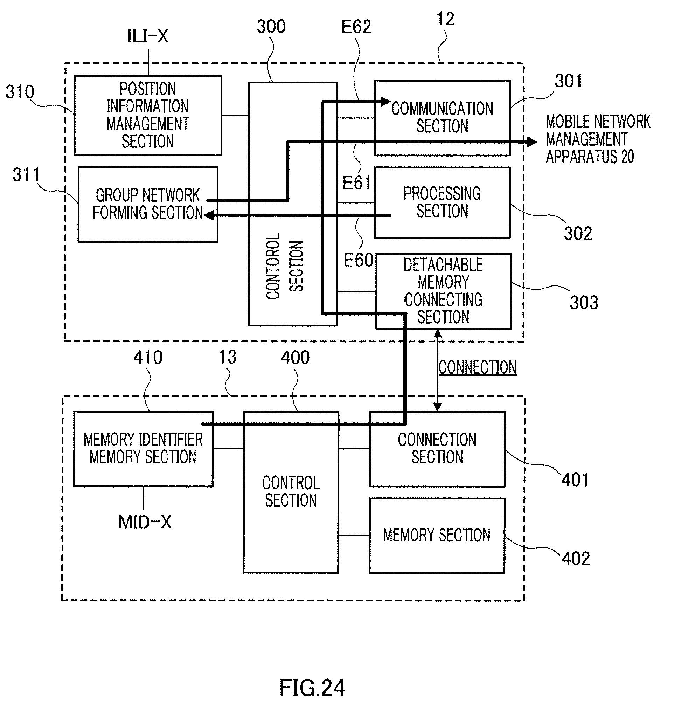

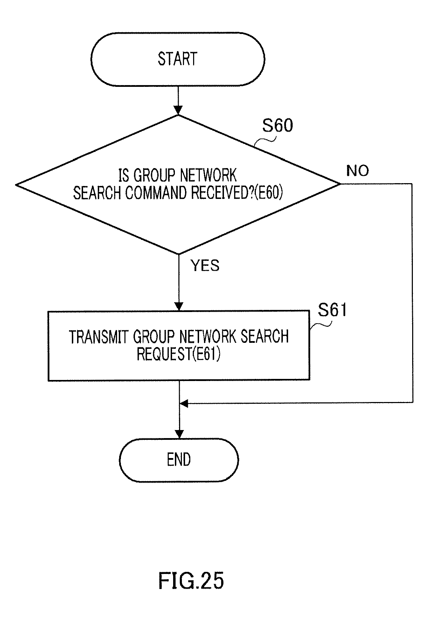

Next, transmission processing for a group network search command executed at communication terminal 12 while a user searches for a communication terminal belonging to group network 40 from communication terminal 12 is described with reference to FIG.24 and FIG.25. FIG.24 is a view showing operation upon transmission of a group network search command in communication terminal 12 and memory card 13, and FIG.25 is a flowchart showing processing for transmitting a group network search command executed at communication terminal 12 and memory card 13.

In FIG.24 and FIG.25, control section 300 in communication terminal 12 checks the presence or absence of a group network search command inputted fromprocessing section 302 by the operation by the user (E60) (step S60). If a group network search command is not received (step S60: "NO"), control section 300 finishes this processing, and, in the event that a group network search command is received (step S60: "YES"), reports the receipt to group network forming section 112 (E60).

In this embodiment, a description is given of the case where a group network search command is inputted to an operation section but the inputted block is by no means limited in this respect and any block that can receive group network search commands may be adopted.

Next, when report of a group network search command is received, group network forming section 311 outputs a group network search command to control section 300. Control section 300 receives the group network search command, transmits a group network search request from communication section 301 to mobile network management apparatus 20 (E61) (step S61) and finishes this processing. As with upon transmission of the second communication terminal information registration request, communication section 301 establishes a secure channel with mobile network management apparatus 20 using memory identifier (MID-X) of memory identifier memory section 410 in memory card 13 and individual access ID information and the registration access ID of memory section 402 (E62), and transmits group network search requests securely using this channel.

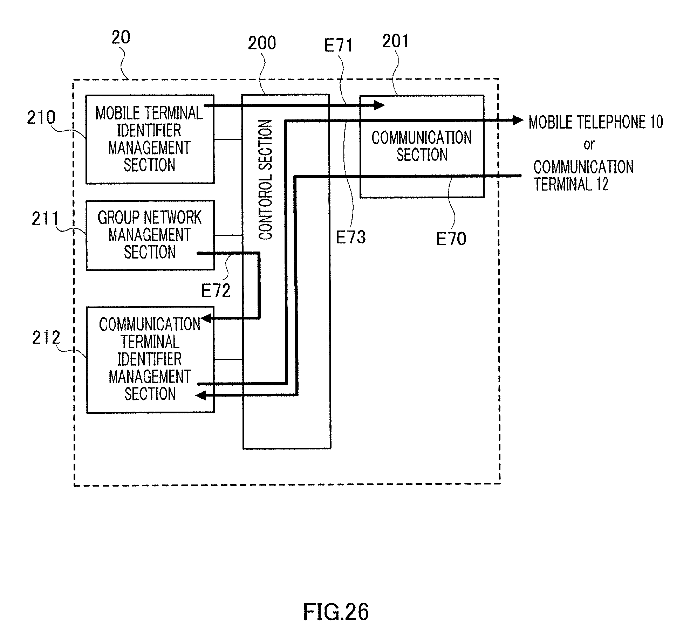

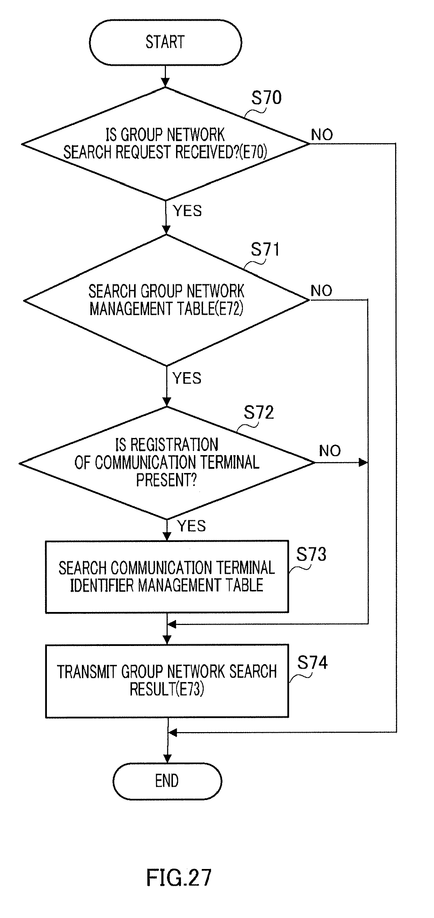

Next, group network processing executed at mobile network management apparatus 20 receiving a group network search request transmitted from mobile telephone 10 or communication terminal 12 is described with reference to FIG.26 and FIG.27. FIG.26 is a view showing a group network search operation in mobile network management apparatus 20 and FIG.27 is a flowchart showing group network search processing executed at mobile network management apparatus 20.

In FIG.26 and FIG.27, control section 200 in mobile network management apparatus 20 confirms receipt of a group network search request from mobile telephone 10 or communication terminal 12 using communication section 201 (E70) (step S70). If this group network search request is received (step S70: "NO"), control section 200 finishes this processing. Further, in the event that a group network search request is received, control section 200 searches group network management table 600 of group network management section 211 and checks whether or not a mobile terminal identifier (ID-A) of mobile telephone 10 of the transmission source or memory identifier (MID-X) of communication terminal 12 is present (E72) (step S71). As with upon receipt of the first communication terminal information registration request and the second communication terminal information registration request, communication section 201 establishes a secure channel with mobile telephone 10 and communication terminal 12 using the mobile terminal identifier (ID-A) of mobile telephone 10 constituting the transmission source and the memory identifier of communication terminal 12 (E71), and securely receives group network search requests using this channel.

Next, when a group network 40 is present (step S71: "YES"), control section 200 searches for the presence or absence of registration of another communication terminal belonging to group network 40 from group network management table 600 (step S72).

In the event that another communication terminal belonging to group network 40 is registered (step S72: "YES"), control section 200 searches the communication terminal identifier of the communication terminal from communication terminal identifier management table 700 in communication terminal identifier management section 212 (step S73). Next, control section 200 transmits the search results as group network search results from communication section 201 to mobile telephone 10 or communication terminal 12 (E73) (step S74) and finishes this processing. Search results for communication terminal identifier management table 700 are included in the group network search results of the case where the communication terminal is included.

Further, in the case that there is no group network 40 in step S71 (step S71: "NO"), and in the event that another communication terminal belonging to group network 40 is not registered in step S72 (step S72: "NO"), control section 200 proceeds to step S73, transmits group network search results indicating that these are not registered from communication section 201 to mobile telephone 10 or communication terminal 12 (E73) (step S74), and finishes this processing.

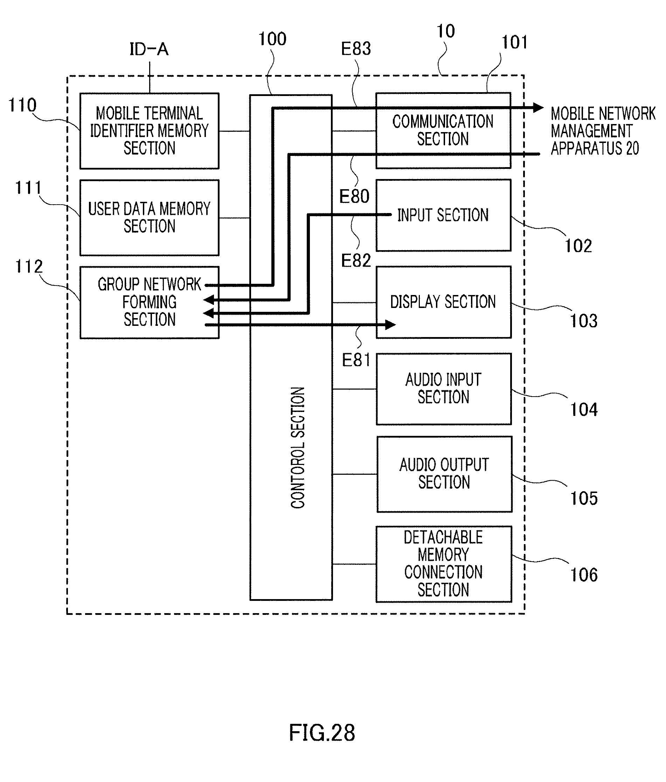

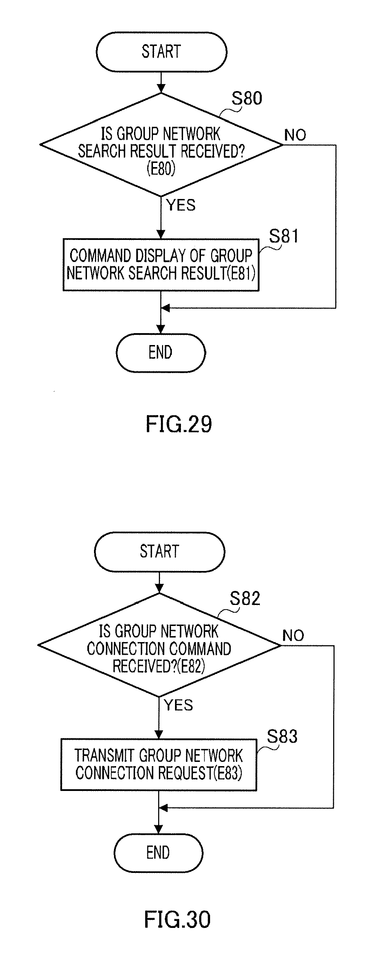

Next, a description is given with reference to FIG.28 to FIG.30 of group network search results display processing and communication connection processing executed at mobile telephone 10 receiving the group network search results. FIG.28 is a view showing a group network search results display operation and communication connection operation for in mobile telephone 10, FIG.29 is a flowchart showing group network search results display processing executed at mobile telephone 10, and FIG.30 is a flowchart showing communication connection processing executed at mobile telephone 10.

In FIG.28 and FIG.29, control section 100 in mobile telephone 10 checks the receipt of group network search results by communication section 101 (E80) (step S80), and, if received (step S80: "YES"), reports the group network search results to group network forming section 112, displays the group network search results in display section 103 (E81) (step S81) and finishes this processing.

In the event that a communication terminal is included in the search results, it is possible for the user to easily identify this communication terminal by displaying communication terminal position information contained in the group network search results together with the user identifier, etc.

Further, if control section 100 has not received the group network search results (step S80: "NO"), control section 100 finishes this processing.

In FIG.28 and FIG.30, control section 100 in mobile telephone 10 checks the presence or absence of a received signal for the group network connection command from input section 102 by the user viewing the displayed group network search results (E82) (step S82), and, when the command is inputted (step S82: "YES"), reports this command to group network forming section 112. Group network forming section 112 receives report of a group network connection command, outputs the group network connection request to control section 100, transmits the group network connection request to mobile network management apparatus 20 using control section 100 and communication section 101 (E83) (step S83) and finishes this processing.

In the following, a communication connection step is executed between mobile telephone 11 and communication terminal 12 constituting other communication terminals in group network 40 making the connection request between mobile telephone 10 and mobile network management apparatus 20.

Further, if control section 100 has not received the group network connection command (step S82: "NO"), control section 100 finishes this processing.

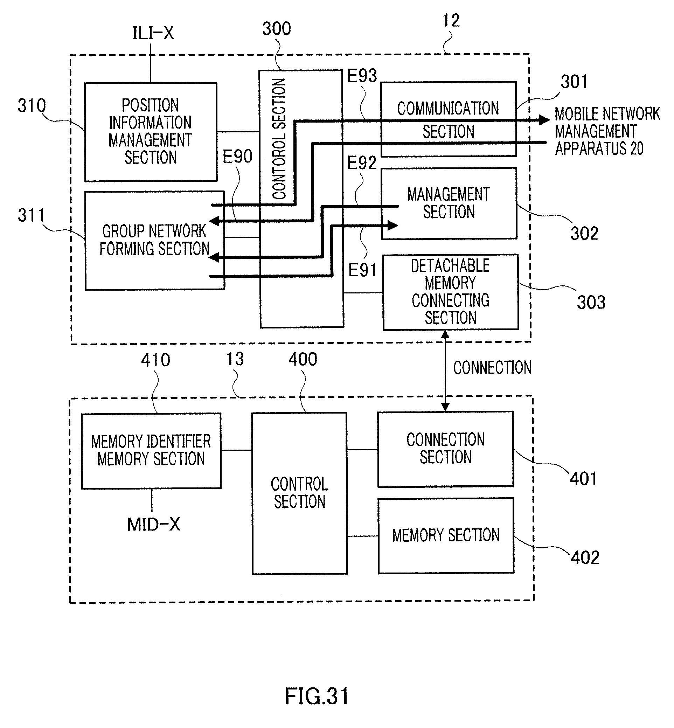

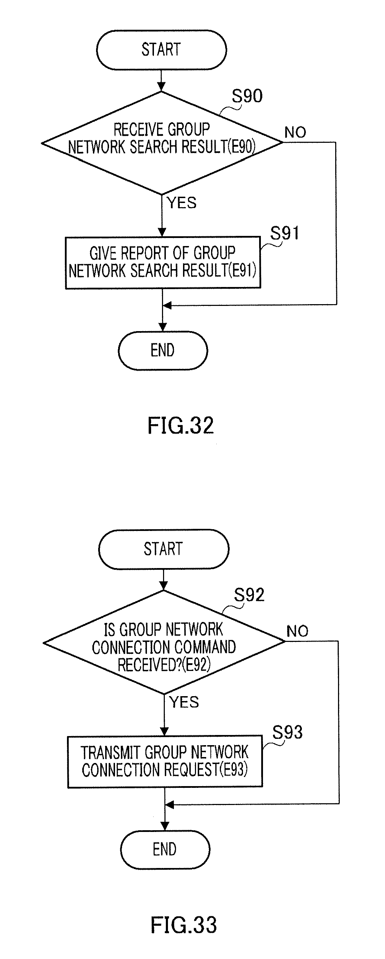

Next, a description is given with reference to FIG.31 to FIG.33 of group network search results display processing and communication connection processing executed at communication terminal 12 receiving the group network search results. FIG.31 is a view showing a group network search results display operation and communication connection operation for in communication terminal 12, FIG.32 is a flowchart showing group network search results display processing executed at communication terminal 12, and FIG.33 is a flowchart showing communication connection processing executed at communication terminal 12.

In FIG.31 and FIG.32, control section 300 in communication terminal 12 checks receipt of the group network search results using communication section 301 (E90) (step S90), and, if received (step S90: "YES"), reports the group network search results to group network forming section 311, displays the group network search results in a display section (not shown) by processing section 302 (E91) (step S91) and finishes this processing.

In the event that a communication terminal is included in the search results, it is possible for the user to easily identify this communication terminal by displaying communication terminal position information contained in the group network search results together with the user identifier, etc.

Further, if control section 300 has not received the group network search results (step S90: "NO"), control section 100 finishes this processing.

In FIG.31 and FIG.33, control section 300 2 checks the presence or absence of a received signal for the group network connection command from the processing section 302 by the user viewing the displayed group network search results (E92) (step 592), and, when the command is inputted (step S92: "YES"), reports this command to group network forming section 311. Group network forming section 311 receives report of a group network connection command, outputs the group network connection request to control section 300, transmits the group network connection request to mobile network management apparatus 20 using control section 300 and communication section 301 (E93) (step S93) and finishes this processing.

In the following, a communication connection step is executed between mobile telephone 10 and mobile telephone 11 constituting other communication terminals in group network 40 making the connection request between communication terminal 12 and mobile network management apparatus 20.

Further, if control section 300 has not received the group network connection command (step S92: "NO"), control section 100 finishes this processing.

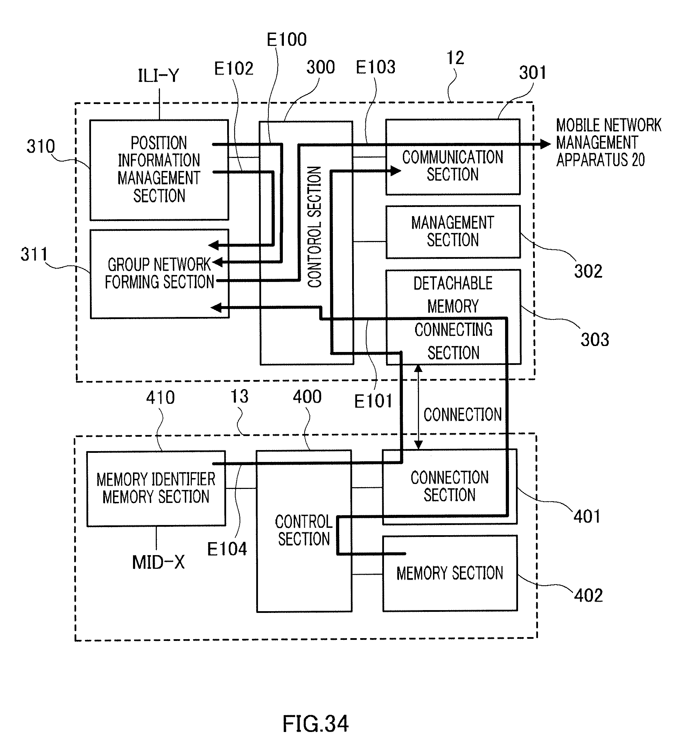

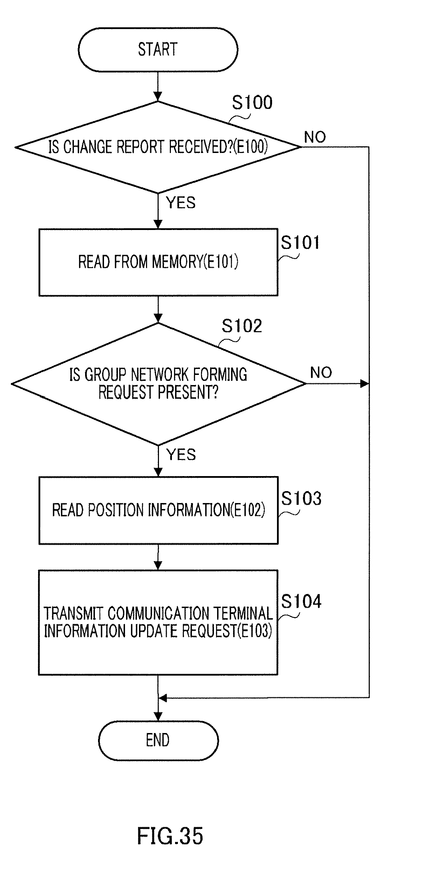

Next, a description is given with reference to FIG.34 and FIG.35 of processing for transmission of communication terminal information updating requests executed at communication terminal 12 while registered communication terminal information changes due to communication terminal 12 moving or replacement of memory card 13 to another communication terminal. FIG.34 shows an updating operation for communication terminal information in communication terminal 12 and memory card 13, and FIG.35 is a flowchart showing processing for updating communication terminal information executed at communication terminal 12 and memory card 13.

In FIG.34 and FIG.35, control section 300 in communication terminal 12 checks the presence or absence of a change report signal for position information inputted from position information management section 310 (E100) (step S100). When a change report signal is inputted (step S100: "YES"), control section 300 transmits a data read command to memory card 13 (E101) (step S101). Further, when a change report signal is not inputted (step S100: "NO"), control section 300 finishes this processing. In this embodiment, a description is given of the case where the change report signal is inputted from position information management section 310, but the inputted block is not limited in this respect and depends on the information required for change, and any block that can receive the change report signal is therefore appropriate.

When a data read command is received, control section 400 in memory card 13 reads out data from memory section 402 and transmits this data to communication terminal 12 (E101).

When data is received from memory card 13, control section 300 checks the presence or absence of a group network forming request command for this data and determines whether or not updating is necessary (step S102). If there is no group network forming request command (step S102: "NO"), control section 300 finishes this processing. Further, if a group network forming request command is present (step S102: "YES"), control section 300 reports the change report signal and read data to group network forming section 311 (E101).

When a change report signal is received, group network forming section 311 reads changed position information (ILI-Y)from positioninformation management section 310 (E102) (step S103), and outputs a communication terminal information updating command containing new position information (ILI-Y) to control section 300 (E103). When a communication terminal information update command is received, control section 300 transmits this communication terminal information update command from communication section 301 to mobile network management apparatus 20 (E103) (step S104) and finishes this processing. As with upon transmission of the second communication terminal information registration request, communication section 301 establishes a secure channel with mobile network management apparatus 20 using memory identifier (MID-X) of memory identifier memory section 410 in memory card 13 and individual access ID information and the registration access ID of memory section 402 (E104), and securely transmits communication terminal information update requests using this channel. In this embodiment, a description is given of transmitting position information upon transmission of the communication terminal information update request but this information is by no means limited in the respect, and any information that can be registered at communication terminal identifier management table 700 may be adopted.

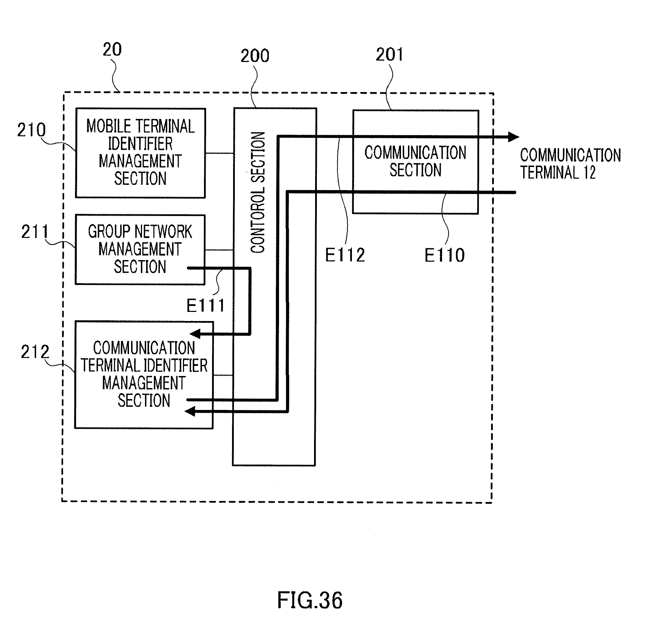

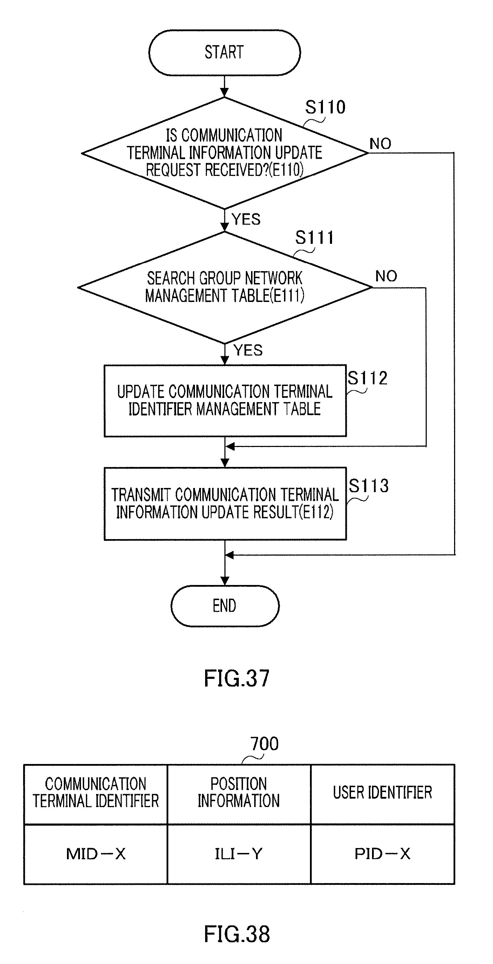

Next, a description is given with reference to FIG.36 and FIG.37 of terminal information update processing executed by mobile network management apparatus 20 receiving the communication terminal information update request. FIG.36 is a view showing the operation upon communication terminal information updating of mobile network management apparatus 20, and FIG.37 is a flowchart showing communication terminal information update processing executed at mobile network management apparatus 20.

In FIG.36 and FIG.37, control section 200 in mobile network management apparatus 20 checks the presence or absence of a received signal for a communication terminal information update request by communication section 201 (E110) (step S110). In the event that a communication terminal information update request is not received (step S110: "NO"), control section 200 finishes this processing. Further, when a communication terminal information update request is received, control section 200 searches group network management table 600 of group network management section 211, and checks the presence or absence of registration of memory identifier (MID-X) of communication terminal 12 of the transmission source (E111) (step S111). As with during receiving of the second communication terminal information registration request, communication section 201 establishes a secure channel with communication terminal 12 using the memory identifier of communication terminal 12 of the transmission source, and securely receives a communication terminal information update request.

In the event that the memory identifier is registered in group network management table 600 (step S111: "YES"), control section 200 re-registers the received new position information (ILI-Y) in communication terminal identifier management table 700 of communication terminal identifier management section 212 (step S112). As a result of this update operation, as shown in FIG.38, new position information (ILI-Y) is registered in the "position information" column corresponding to communication terminal 12 at communication terminal identifier management table 700.

Next, control section 200 transmits the communication terminal information registration results (registration OK) from communication section 201 to communication terminal 12 (E112) (step S113) and finishes this processing. Further, in the event that the memory identifier is not registered in group network management table 600 (step S111: "NO"), control section 200 proceeds to step S113 without registering the position information, transmits the communication terminal information registration results (registration NG) from communication section 201 to communication terminal 12 (E112) (step S113), and finishes this processing. This update information may also be reported to a communication terminal belonging to the same group network.

Further, the charge for access from communication terminal 12 is charged according to charge information (AI-A) of the mobile terminal identifier (ID-A) that is registered so as to correlate with the memory identifier (MID-X) of memory card 13.

As shown above, at the group network system of the first embodiment, a mobile telephone or communication terminal (household appliance or personal computer etc.) connected to a mobile telephone network or the Internet is applied as communication terminal apparatus connected to a network. Further, this is applied to items having a function for connecting to the detachable memory card at the mobile telephone and communication terminal. Further, application is also possible where an anti-tamper module that is resistant to reverse actions such as disassembly and analysis etc. and large capacity non-volatile memory are provided at the memory card to give a secure memory card. It is then possible to securely store identification information etc. in part of the non-volatile memory using a program stored in the anti-tamper module.

At the group network system of the first embodiment, a mobile network management apparatus that is a group network management apparatus forms a group network by receiving a mobile terminal identifier and communication terminal identifier used in client authentication and registering this in a group network management table while receiving a registration request transmitted from a mobile telephone or communication terminal to a transmitting group network.

Further, with the group network system of the first embodiment, while the communication terminal is registered to the group network, the memory identifier stored in the memory card connected under the control of the group network forming section in the mobile telephone is read out and a secure channel is established using the mobile terminal identifier based on the mobile communication step. After establishment, the memory identifier is transmitted to the mobile network management apparatus together with the registration request.

Participation of a plurality of communication terminal apparatuses connected to a network such as communication terminal apparatus etc. belonging to household appliances etc. in group network services is therefore possible. Further, registration processing from the mobile communication terminal apparatus and communication terminal apparatus to the group network management apparatus utilizes a detachable memory card. It is therefore possible to alleviate the load on the user in registration to the group network, and circulation of the group network service is promoted.

Further, a secure channel is established using key information stored in the memory card based on PKI during a registration request from the communication terminal apparatus to the group network management apparatus. The group network management apparatus then determines approval of registration to the group network of the terminal identification information from the received key information. This makes it possible to provide a secure group network service where user authentication etc. of the communication terminal apparatus connecting to the group network is straightforward, and also broadens the range of applicability of the group network service.

Further, in the group network system of the first embodiment, with the group network management apparatus, charge information for the mobile communication terminal apparatus and the communication terminal apparatus registered in the group network is collectively managed, and charging management for a plurality of communication terminal apparatuses connected to a plurality of different networks belonging to the same user is straightforward.

### (Embodiment 2)

In the second embodiment, a description is given for the case of application to a usual memory card rather than to a secure memory card as in the first embodiment.

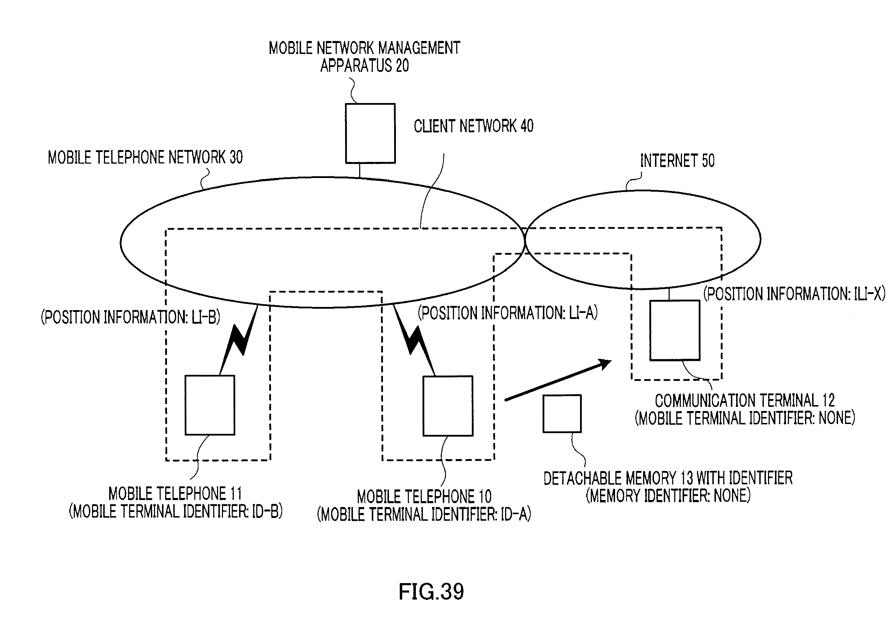

FIG.39 is a view showing a system configuration of a group network system of the second embodiment, and as the configuration is the same as for the group network system shown in FIG. 1, each element of the configuration is given the same number and a description of the configuration is omitted. Memory card 13 is different from the first embodiment in that an anti-tamper module that is resistant to reverse actions such as disassembly and analysis etc. is not provided and identification information etc. cannot be stored in a safe manner.

Further, the configuration of each of the mobile telephones 10 and 11, mobile network management apparatus 20 and communication terminal 12 is the same as for the first embodiment and a description of schematic representations and structure is omitted.

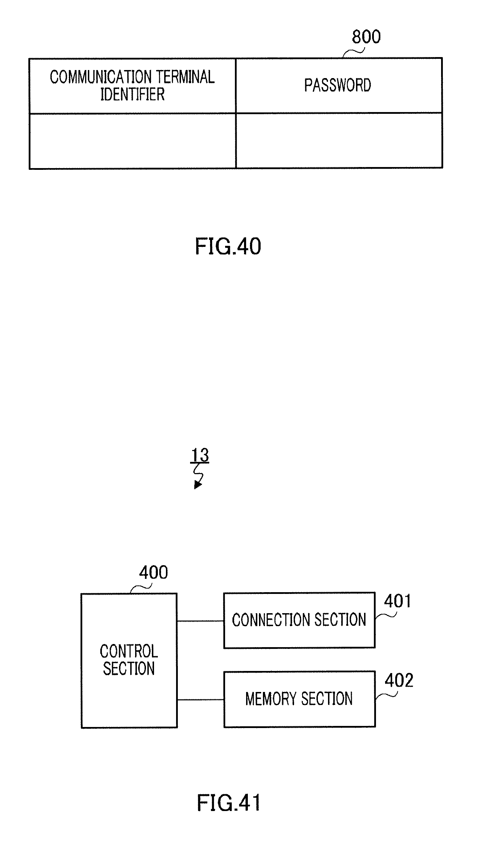

FIG.40 is a view showing an example of a communication terminal identifier generating table 800 in mobile telephone 10. At communication terminal identifier generating table 800, a communication terminal identifier made in mobile telephone 10 and a password are stored in association with each other.

In this embodiment, a description is given of the case where "password" is taken as the information stored so as to correlate with "communication terminal identifier" at communication terminal identifier generating table 800 but this information is by no means limited, and any item that enables verification of authenticity during verification of the communication terminal identifier at the mobile telephone may be adopted. For example, in the event that the position information for the communication terminal is already known, the position information may also be included.

FIG.41 is a block diagram showing an outline configuration of memory card 13, portions of the configuration that are the same as for memory card 13 shown in FIG.8 of the first embodiment are given the same numerals, and portions of the configuration that are different to memory card 13 of the first embodiment are such that the memory identifier memory section 410 storing the memory identifier is no longer present.

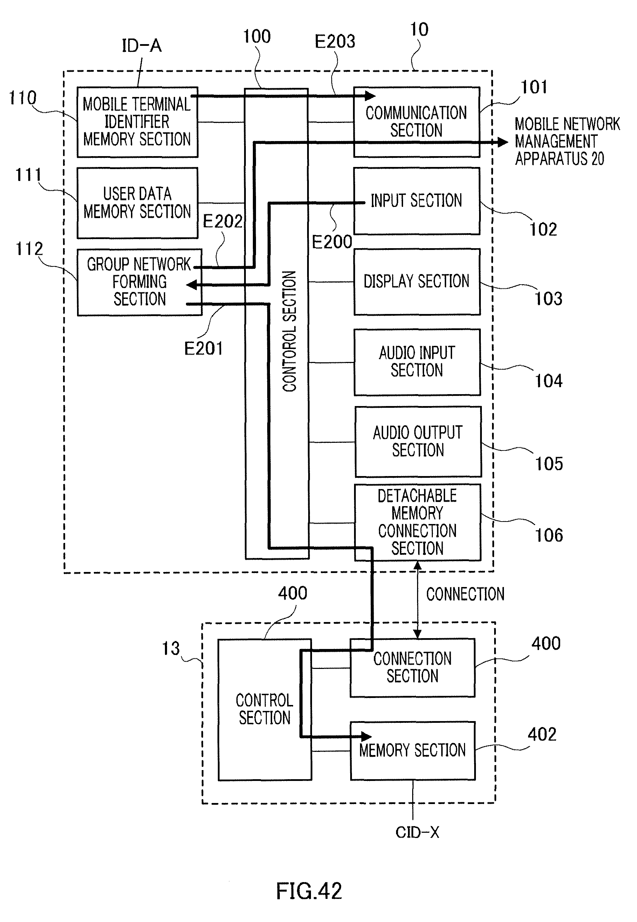

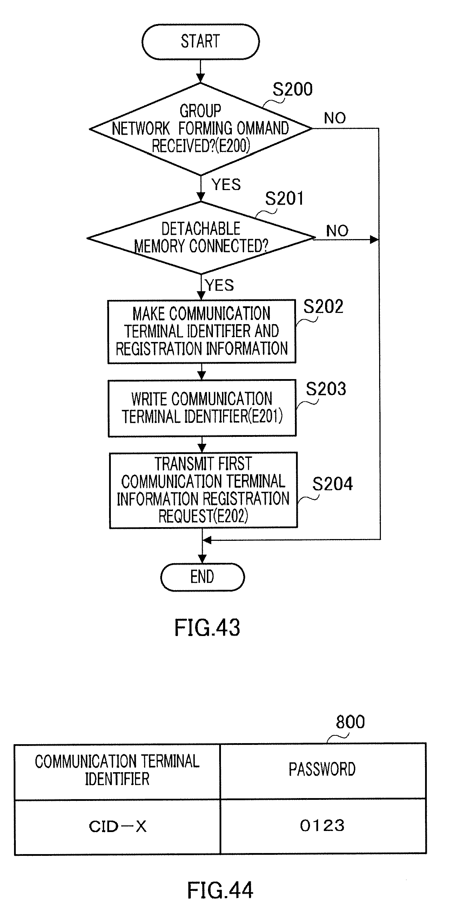

Next, a description is given with reference to FIG.42 and FIG.43 regarding processing while mobile telephone 10 forms a group network. FIG.42 is a view showing operation upon formation of a group network in mobile telephone 10 and memory card 13, and FIG.43 is a flowchart of processing for forming a group network executed at mobile telephone 10 and memory card 13.

In FIG.42 and FIG.43, mobile telephone 10 starts a group network forming operation when a group network forming command is inputted from input section 102 of mobile telephone 10. In this embodiment, a description is given of the case where a group network forming command is inputted to an input section but the inputted block is by no means limited in this respect and any block that can receive group network forming commands may be adopted.

When a group network forming command is inputted from input section 102 (E200), control section 100 in mobile telephone 10 determines whether or not this command is a group network forming command (step S200). When it is determined that the command is not a group network forming command (step S200: "NO"), control section 100 finishes this processing. When it is determined that the command is a group network forming command (step S200: "YES"), a group network forming command is outputted to group network forming section 112.

Next, control section 100 confirms that memory card 13 is connected to detachable memory connection section 106 (step S201), and, if memory card 13 is not connected (step S201: "NO"), finishes this processing. Further, when it is confirmed that memory card 13 is connected (step S201: "YES"), control section 100 makes a password as authentication information corresponding to communication terminal identifier using a public key and private key based on RAS as a communication terminal identifier, and stores and manages this password in communication terminal identifier generating table 800 (step S202). As shown in FIG.44, communication terminal identifier "CID-X" and password "0123" are stored in communication terminal identifier generating table 800. Further, control section 100 issues a certificate for the public key that is produced based on PKI and manages this as a communication terminal identifier (S202). Making of the communication terminal identifier and this authentication information may be carried out by group network forming section 112.

Next, control section 100 outputs an command for writing of the produced communication terminal identifier (public key, secret key, certificate) to memory card 13 via detachable memory connection section 106 (E201) (step S203). When a communication terminal identifier and a write command are received from connection section 401, control section 400 in memory card 13 stores the communication terminal identifier in memory section 402.

Next, control section 100 in mobile telephone 10 transmits a first communication terminal information registration request containing the public key and certificate for the made communication terminal identifier (CID-X) from communication section 101 to mobile network management apparatus 20 (E202) (step S204), and finishes this processing.

In this embodiment, a description is given of the case where a public key and certificate of communication terminal identifier (CID-X) are used as the registered communication terminal identifier but this is by no means limited, and any information capable of uniquely identifying the communication terminal identifier (CID-X) such as a digital signature etc. may be adopted.

Communication section 101 establishes a secure channel with mobile network management apparatus 20 upon transmission of the first communication terminal information registration request using mobile terminal identifier (ID-A) of mobile terminal identifier memory section 110 based on the mobile communication step (E203) . At mobile network management apparatus 20, mobile terminal identifier (ID-A) is used in client authentication of mobile telephone 10. As a result, a secure channel is established with mobile network management apparatus 20, and by using this channel it is possible to securely transmit the first communication terminal information registration request.

In the event that server authentication of mobile network management apparatus 20 is necessary, the public key and certificate of mobile network management apparatus 20 are requested in accordance with an authentication method such as PKI etc., and after this, this authentication processing may be carried out. At this time, the public key and certificate of mobile network management apparatus 20 are outputted to control section 100 and control section 100 reports the inputted public key and certificate of mobile network management apparatus 20 to group network forming section 112.

In this embodiment, a description is given using a mobile terminal identifier based on a mobile communication step as client authentication but this method is by no means limited in this respect and any method capable of authenticating mobile telephone 10 from mobile network management apparatus 20 such as the case of using individual access ID information stored in user data memory section 111 or the case of using an authentication method such as PKI etc. may be adopted.

Next, registration processing of communication terminal identifier (CID-X) is carried out at mobile network management apparatus 20 by the first communication terminal information registration request, and an operation of writing to memory card 13 of the executed data at mobile telephone 10 receiving the registration results is carried out.

In this embodiment, write processing for the communication terminal identifier is carried out in mobile telephone 10 and in memory card 13 upon formation of the group network but this may also be carried out upon writing to the data to memory card 13.

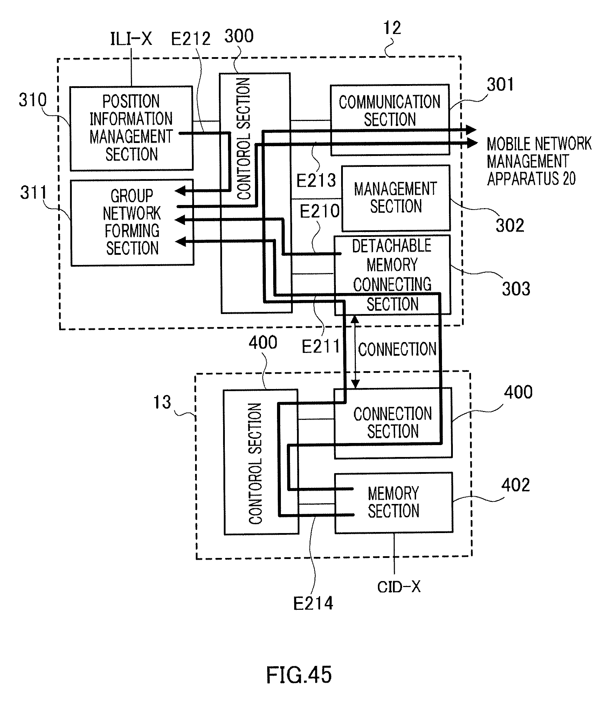

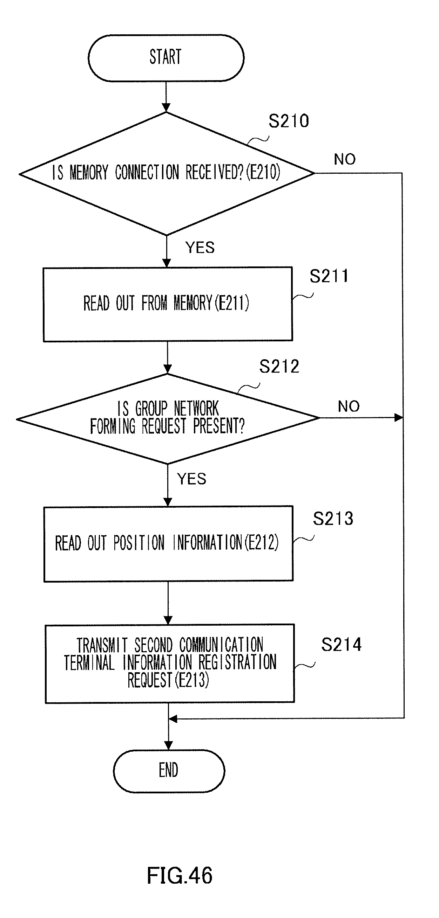

Next, a description is given with reference to FIG.45 and FIG.46 of group network forming processing executed at communication terminal 12 while memory card 13 the data is written to at mobile telephone 10 is taken out by a user and connected to communication terminal 12. FIG.45 is a view showing operation upon formation of a group network in communication terminal 12 and memory card 13, and FIG.46 is a flowchart showing processing for forming a group network executed at communication terminal 12 and memory card 13.

In FIG.45 and FIG.46, control section 300 in communication terminal 12 checks the presence or absence of a memory card connection signal inputted from detachable memory connecting section 303 in communication terminal 12 (E210) (step S210). When a memory card connection signal is inputted (step S210 : "YES"), control section 300 transmits a data read command to memory card 13 (E211) (step S211). Further, when a memory card connection signal is not inputted (step S210: "NO"), control section 300 finishes this processing. In this embodiment, a description is given of the case where the memory card connection signal is inputted from detachable memory connecting section 303 but the inputting block is by no means limited, and any block that can receive a memory card connection signal is appropriate.

When a data read command is received, control section 400 in memory card 13 reads out data from memory section 402 and transmits this data to communication terminal 12 (E211).

When data is received from memory card 13, control section 300 checks the presence or absence of a group network forming request command for this data (step S212). If there is no group network forming request command (step S212: "NO"), control section 300 finishes this processing. Further, if a group network forming request command is present (step S212: "YES"), control section 300 reports the group network forming request command to group network forming section 311. Verification of the presence or absence of a group network forming request command is carried out at control section 400 before transmitting data to communication terminal 12.

Next, when REPORT of a group network forming request command is received, group network forming section 311 reads position information (ILI-X) from position information management section 310 (E212) (step S213), and a second communication terminal information registration command containing position information (ILI-X) is outputted to control section 300 (E213). When a communication terminal information registration command is received together with position information and a communication terminal identifier, control section 300 transmits this position information (ILI-X) and the second communication terminal information registration request from communication section 301 to mobile network management apparatus 20 (E213) (step S214), and finishes this processing. In this embodiment, a description is given of transmitting position information upon transmission of the communication terminal information registration request but this information is by no means limited in the respect, and any information that can be registered at communication terminal identifier management table 700 may be adopted.

Communication section 301 establishes a secure channel with mobile network management apparatus 20 using communication terminal identifier (CID-X) of memory section 402 in memory card 13 based on PKI (E214) upon transmission of the second communication terminal information registration request. After establishment, individual access ID information and registration access ID information read out from memory section 402 is transmitted to mobile network management apparatus 20. At mobile network management apparatus 20, this information is used in client authentication of communication terminal 12. As a result, a secure channel is established with mobile network management apparatus 20, and, by using this channel, it is possible to transmit the second communication terminal information registration request securely. Further, input of a password by a user is obtained upon transmission of the second communication terminal information registration request and is transmitted together with the inputted password.

In the event that server authentication of mobile network management apparatus 20 is necessary, the public key and certificate for mobile network management apparatus 20 is requested in accordance with an authentication method such as PKI etc. After receipt, this authentication processing may be carried out, or authentication processing may be carried out by comparing the received data with the public key and certificate of mobile network management apparatus 20 read out from memory section 402. In the event of comparison with information for memory section 402, at communication terminal 12, it is possible to reduce processing as a result of communication with an external authentication authority etc. no longer being necessary. During transmission to mobile network management apparatus 20, position information for mobile network management apparatus 20 read out from memory section 402 can be used as the destination.

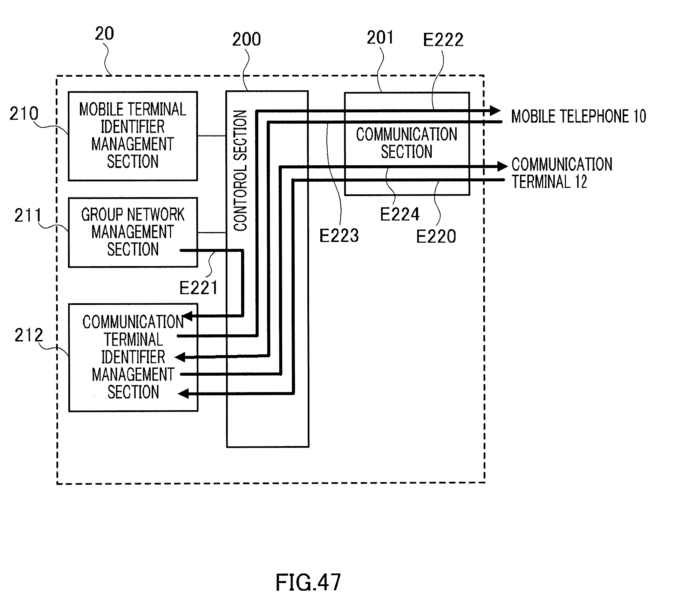

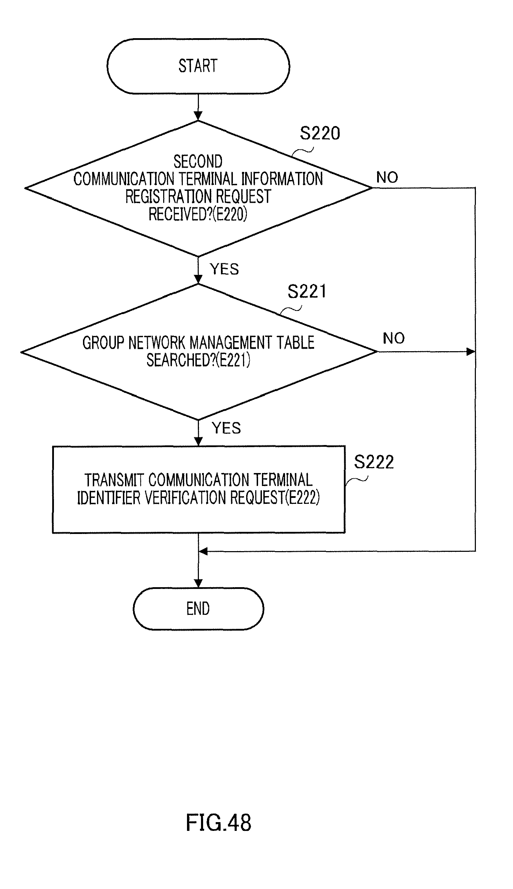

Next, a description is given with reference to FIG.47 and FIG.48 of second terminal information registration processing executed by mobile network management apparatus 20 receiving the second communication terminal information registration request. FIG.47 is a view showing the operation upon second communication terminal information registration of mobile network management apparatus 20, and FIG.48 is a flowchart showing second communication terminal information registration processing executed at mobile network management apparatus 20.

In FIG.47 and FIG.48, control section 200 of mobile network management apparatus 20 checks the presence or absence of the receipt of a second communication terminal information registration request from communication section 201 (E220) (step S220), and, in the event that the second communication terminal information registration request is not received (step S220: "NO"), finishes this processing. Further, when receipt of the second communication terminal information registration request is confirmed (step S220: "YES"), control section 200 searches group network management table 600 of group network management section 211, and checks the presence or absence of registration of communication terminal identifier (CID-X) of communication terminal 12 of the transmission source (E221) (step S221).

Upon receipt of the second communication terminal information registration request, based on PKI, communication section 201 establishes a secure channel with communication terminal 12 using communication terminal identifier (CID-X) of communication terminal 12 of the transmission source. At mobile network management apparatus 20, communication terminal identifier (CID-X) is used in client authentication of communication terminal 12. As a result, a secure channel is established with communication terminal 12, and by using this channel it is possible to receive the second communication terminal information registration request securely.

In the event that a public key and certificate for mobile network management apparatus 20 is taken as server authentication, the public key, certificate, and digital signature of mobile network management apparatus 20 may be transmitted to communication terminal 12 in accordance with an authentication method such as PKI etc.

Next, in the event that the communication terminal identifier is recorded in group network management table 600 (step S221: "YES"), control section 200 transmits a communication terminal identifier verification request from communication section 201 to mobile telephone 10 of mobile terminal identifier (ID-A) that is registered in association with communication terminal identifier (CID-X) (E222) (step S222), and finishes this processing. The password and position information (ILI-X) for communication terminal 12 included in the communication terminal information registration request are included in the communication terminal identifier verification request. Further, in the event that the communication terminal identifier is not registered in group network management table 600 (step S221: "NO"), control section 200 finishes this processing.

In the event that a secure memory card and a memory card are combined, there is no objection if it is determined whether or not to transmit a communication terminal identifier verification request using the content of the certificate for the identifier.

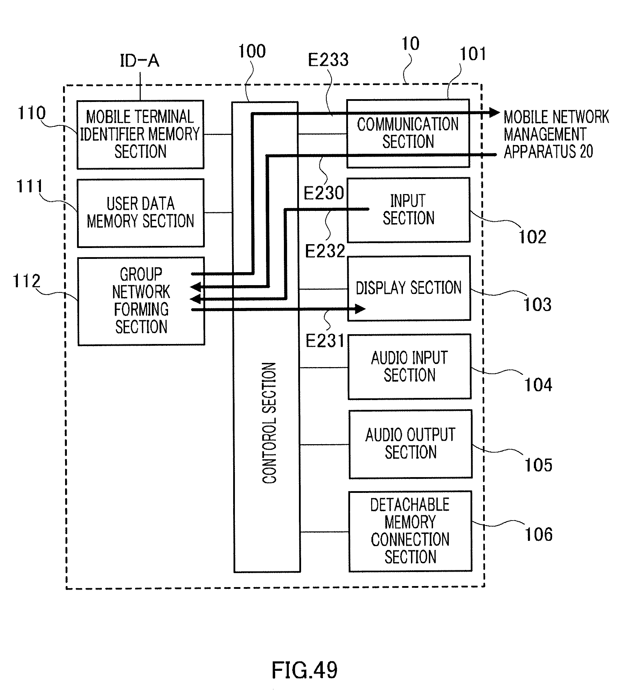

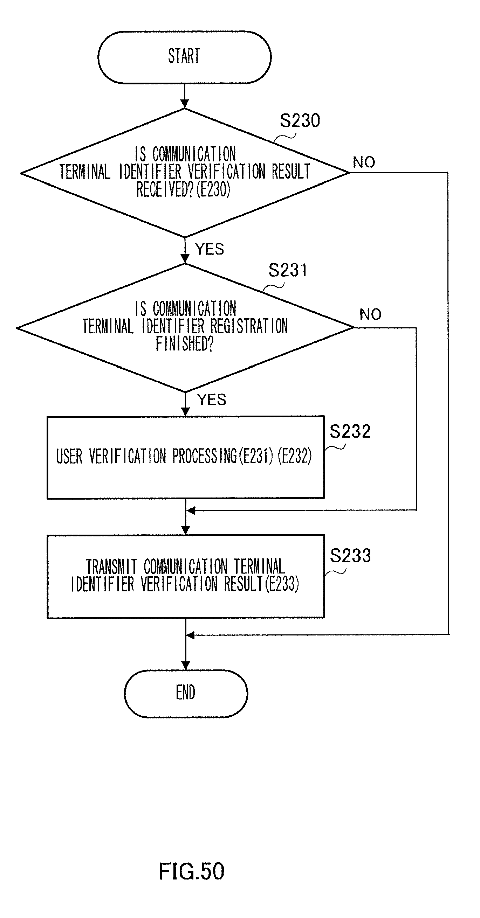

Next, a description is given with reference to FIG.49 and FIG.50 of the operation upon communication terminal identifier verification executed at mobile telephone 10 receiving the communication terminal identifier verification request. FIG.49 is a view showing the operation upon verification of the communication terminal identifier in mobile telephone 10, and FIG.50 is a flowchart showing communication terminal identifier verification processing executed at mobile telephone 10.

In FIG.49 and FIG.50, control section 100 of mobile telephone 10 checks the presence or absence of a received signal for a communication terminal identifier verification request from communication section 101 (E230) (step S230), and, if not received (step S230: "NO"), finishes this processing, while, if received (step S230: "YES"), confirming completion of the registration of the communication terminal identifier (CID-X) by communication terminal identifier generating table 800 (step S231).

When it is confirmed that registration of communication terminal identifier (CID-X) at communication terminal identifier generating table 800 is finish and that the passwords match (step S231: "YES"), control section 100 displays position information (ILI-X) for this communication terminal identifier verification request at display section 103 and the user is invited to perform position information verification processing (E231) (step S232). When a registration information verification command is inputted from input section 102 (E232) (step S232), control section 100 transmits the communication terminal identifier verification results (verification OK) from communication section 101 to mobile network management apparatus 22 (E233) (step S233) and finishes this processing.

In this embodiment, a description is given of the case where whether or not a received password matches with a password registered in communication terminal identifier generating table 800 is verified during verification of the communication terminal identifier and position information is verified by the user but this is by no means limited to this verification method, and any method capable of verifying the authenticity of a communication terminal is appropriate.

Further, when it is verified that the communication terminal identifier (CID-X) is not registered in communication terminal identifier generating table 800 and that the passwords do not match (step S231: "NO"), control section 100 transmits the communication terminal identifier verification results (verification NG) from communication section 101 to mobile network management apparatus 22 (E233) (step S233), and this processing is finish.

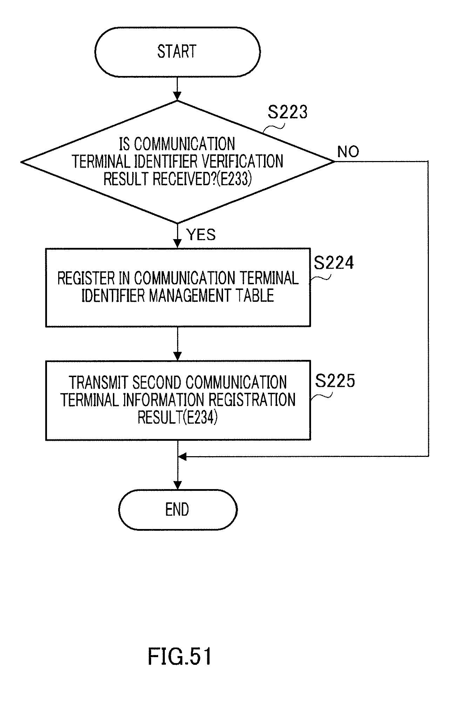

Next, a description is given with reference to flowcharts shown in FIG.47 and FIG.51 of terminal information registration processing executed by mobile network management apparatus 20 receiving communication terminal identifier verification results.

In FIG.47 and FIG.51, control section 200 in mobile network management apparatus 20 checks the presence or absence of a received signal for communication terminal identifier verification results from communication section 201 (E223) (step S223). If verification OK is not received (step S223: "NO"), this processing is finish. If verification OK is received (stepS223: "YES"), position information (ILI-X) received in step S220 of FIG.48 is registered in communication terminal identifier management table 700 of communication terminal identifier management section 212 (step S224). As a result of this registration operation, position information (ILI-X) is registered in the "position information" column corresponding to communication terminal 12 at communication terminal identifier management table 700.

Next, control section 200 transmits the communication terminal information registration results (registration OK) from communication section 201 to communication terminal 12 (E224) (step S225), and finishes this processing.

As shown above, at the group network system of the second embodiment, a mobile telephone or communication terminal (household appliance or personal computer etc.) connected to a mobile telephone network or the Internet is applied as communication terminal apparatus connected to a network. Further, this is applied to items having a function for connecting to the detachable memory card at the mobile telephone and communication terminal. Further, the memory card may be a usual memory card rather than a secure memory card.

At the group network system of the second embodiment, a mobile network management apparatus that is a group network management apparatus forms a group network by receiving a mobile terminal identifier and communication terminal identifier used in client authentication and registering this in a group network management table while receiving a registration request transmitted from a mobile telephone or communication terminal to a transmitting group network.

Further, with the group network system of the second embodiment, while the communication terminal is registered to the group network, the memory identifier stored in the memory card connected under the control of the group network forming section in the mobile telephone is read out and a secure channel is established using the mobile terminal identifier based on the mobile communication step. After establishment, the memory identifier is transmitted to the mobile network management apparatus together with the registration request.

Participation of a plurality of communication terminal apparatuses connected to a network such as communication terminal apparatus etc. belonging to household appliances etc. in group network services is therefore possible. Further, registration processing from the mobile communication terminal apparatus and communication terminal apparatus to the group network management apparatus utilizes a detachable memory card. It is therefore possible to alleviate the load on the user in registration step to the group network, and circulation of the group network service is promoted.

Further, a secure channel is established using key information stored in a memory card based on PKI during a registration request from the communication terminal apparatus to the group network management apparatus. The group network management apparatus therefore determines approval of registration to the group network of the terminal identification information after verification of the received key information at the mobile terminal apparatus. It is therefore possible to supply secure group network services and broaden the applicable range of the group network services.

Moreover, processing is carried out to register to a group network of a user utilizing a normal memory card rather than a secure memory card. The applicable range of the group network services is therefore broader than the case of utilizing a secure memory card.

### (Embodiment 3)

In a third embodiment, a description is given of the case of application to NFC (Near-Field Communication) taking near-field communication in place of the memory card applied in the first and second embodiments.

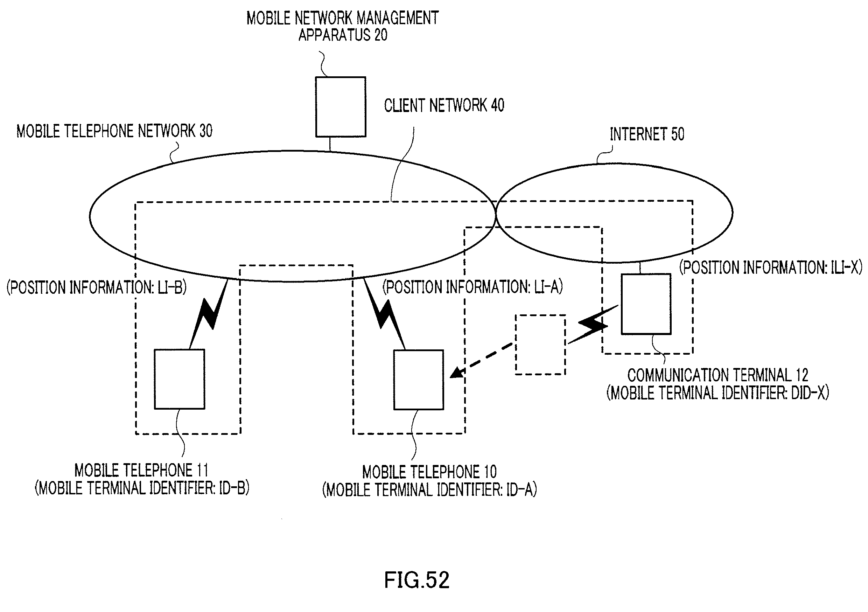

FIG.52 is a view showing a system configuration of a group network system of the third embodiment, and as the configuration is the same as for the group network system shown in FIG. 1, each element of the configuration is given the same number and a description of the configuration is omitted. A memory card is not utilized in this group network system. As with memory card 13 of the first embodiment, communication terminal 12 is equipped with non-volatile memory, and an anti-tamper module that is resistant to reverse actions such as disassembly and analysis etc., and is capable of securely storing identification information etc.

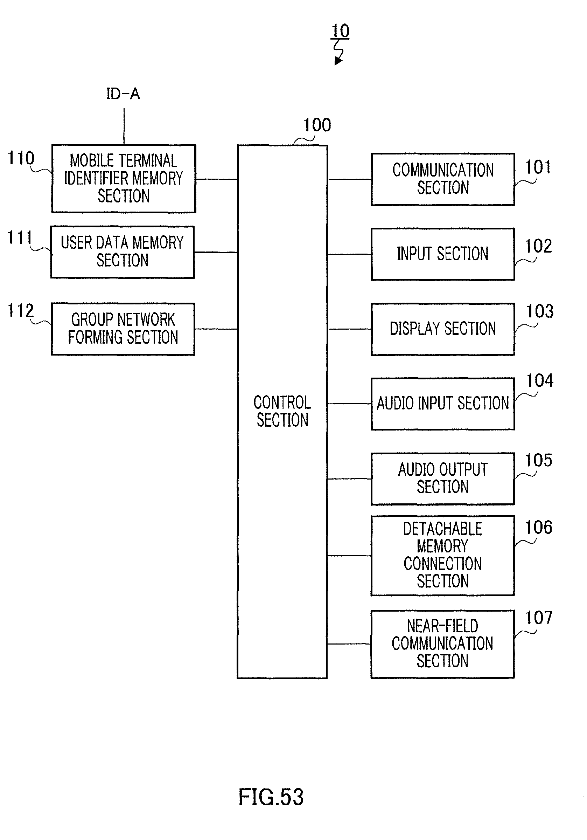

FIG.53 is a view showing an outline configuration of mobile telephone 10 of the third embodiment. Portions of the configuration that are the same as for mobile telephone 10 in FIG.2 are given the same numerals, and are not described. Mobile telephone 10 of FIG.53 has a near-field communication section 107 added. Near-field communication section 107 is similarly equipped with a near-field communication function for exchanging data with communication terminal 12 using near-field wireless communication. It is taken that "ID-A" taken as a mobile terminal identifier is stored at mobile terminal identifier memory section 110 of FIG.49.

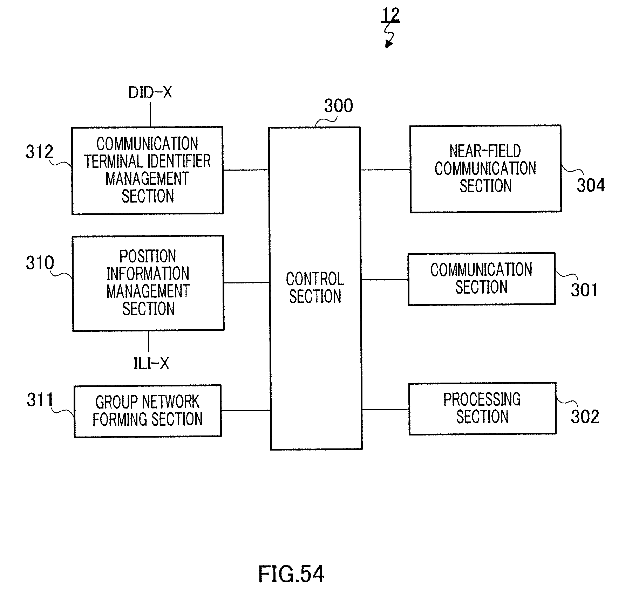

Further, FIG.54 is a view showing an outline configuration of communication terminal 12 of the third embodiment. Portions of the configuration that are the same as for communication terminal 12 in FIG.7 are given the same numerals, and are not described. At communication terminal 12 of FIG.54, a near-field communication section 304 and communication terminal identifier management section 312 are added. Near-field communication section 304 also exchanges data using near-field wireless communication with mobile telephone 10 similarly equipped with a near-field communication function. Communication terminal identifier management section 312 stores key information comprised of a public key, private key, and certificate based on RSA as a communication terminal identifier (DID-X), a program executing access authentication to the key information, and a program executing public key encryption and digital signatures based on PKI. Information stored in communication terminal identifier management section 312 limits access from communication terminal 12.

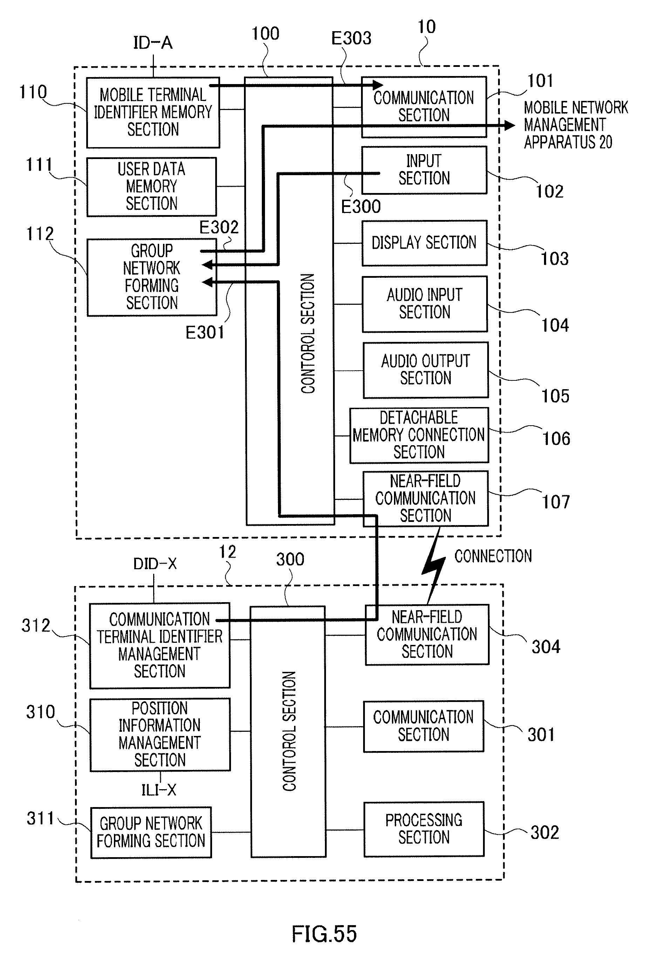

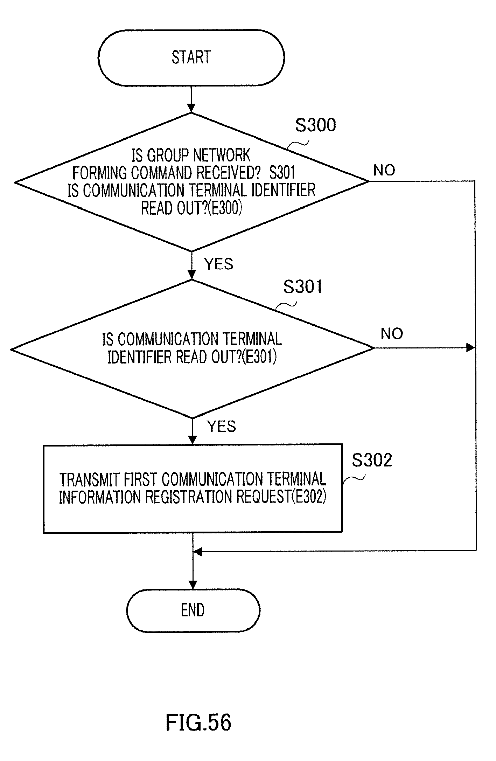

Next, a description is given with reference to FIG.55 and FIG.56 regarding processing while mobile telephone 10 and communication terminal 12 form a group network. FIG.55 is a view showing operation upon formation of a group network in mobile telephone 10 and communication terminal 12, and FIG.56 is a flowchart showing processing for forming a group network executed at mobile telephone 10 and communication terminal 12.

In FIG.55 and FIG.56, mobile telephone 10 in the vicinity of communication terminal 12 starts a group network forming operation when a group network forming command is inputted from input section 102 of mobile telephone 10. In this embodiment, a description is given of the case where a group network forming command is inputted to the input section in a mobile telephone but the inputted block is by no means limited in this respect and any block that can receive group network forming commands may be adopted.

When a group network forming command is inputted from input section 102 (E300), control section 100 in mobile telephone 10 determines whether or not this command is a group network forming command (step S300) . When it is determined that the command is not a group network forming command (step S300: "NO"), control section 100 finishes this processing. When it is determined that the command is a group network forming command (step S300: "YES"), control section 100 outputs a group network forming command to group network forming section 112.

Next, when a group network forming command is inputted, group network forming section 112 outputs a communication terminal identifier read command to control section 100. Control section 100 then transmits a communication terminal identifier read request from near-field communication section 107 to communication terminal 12 using a communication terminal identifier read command (E301), and checks the presence or absence of a received signal for the communication terminal identifier (step S301).

When a communication terminal identifier read request is received from near-field communication section 304, control section 300 in communication terminal 12 reads a public key and a certificate for communication terminal identifier (DID-X) and a certificate from communication terminal identifier memory section 312, and transmits these from near-field communication section 304 to mobile telephone 10 (E301). In the event that position information such as installation of communication terminal 12 already being finish etc. does not change, control section 300 in communication terminal 12 may acquire position information (ILI-X) for communication terminal 12 from position information management section 310 for transmission.

If control section 100 in mobile telephone 10 receives the communication terminal identifier (step S301: "NO"), the processing is finished, and if a communication terminal identifier is received (step S301: "YES"), the first communication terminal information registration request containing the received communication terminal identifier (DID-X) is transmitted from communication section 101 to mobile network management apparatus 20 (E302) (step S302), and finishes this processing. A public key and certificate for communication terminal identifier (DID-X) are contained in the first communication terminal information registration request. Further, in the event that the position information is also received, the position information is also transmitted to mobile network management apparatus 20.

In this embodiment, a description is given of the case where a public key and certificate of communication terminal identifier (DID-X) are used as the registered communication terminal identifier but this is by no means limited, and any information capable of uniquely identifying the communication terminal identifier (DID-X) such as a digital signature etc. may be adopted.

Communication section 101 establishes a secure channel with mobile network management apparatus 20 upon transmission of the first communication terminal information registration request using mobile terminal identifier (ID-A) of mobile terminal identifier memory section 110 based on the mobile communication step (E303) . At mobile network management apparatus 20, mobile terminal identifier (ID-A) is used in client authentication of mobile telephone 10. As a result, a secure channel is established with mobile network management apparatus 20, and by using this channel it is possible to securely transmit the first communication terminal information registration request.

In the event that server authentication of mobile network management apparatus 20 is necessary, the public key and certificate of mobile network management apparatus 20 are requested in accordance with an authentication method such as PKI etc., and after this, this authentication processing may be carried out. At this time, the public key and certificate of mobile network management apparatus 20 are outputted to control section 100 and control section 100 reports the inputted public key and certificate of mobile network management apparatus 20 to group network forming section 112.

In this embodiment, a description is given using a mobile terminal identifier based on a mobile communication step as client authentication but this method is by no means limited in this respect and any method capable of authenticating mobile telephone 10 from mobile network management apparatus 20 such as the case of using individual access ID information stored in user data memory section 111 or the case of using an authentication method such as PKI etc. may be adopted.

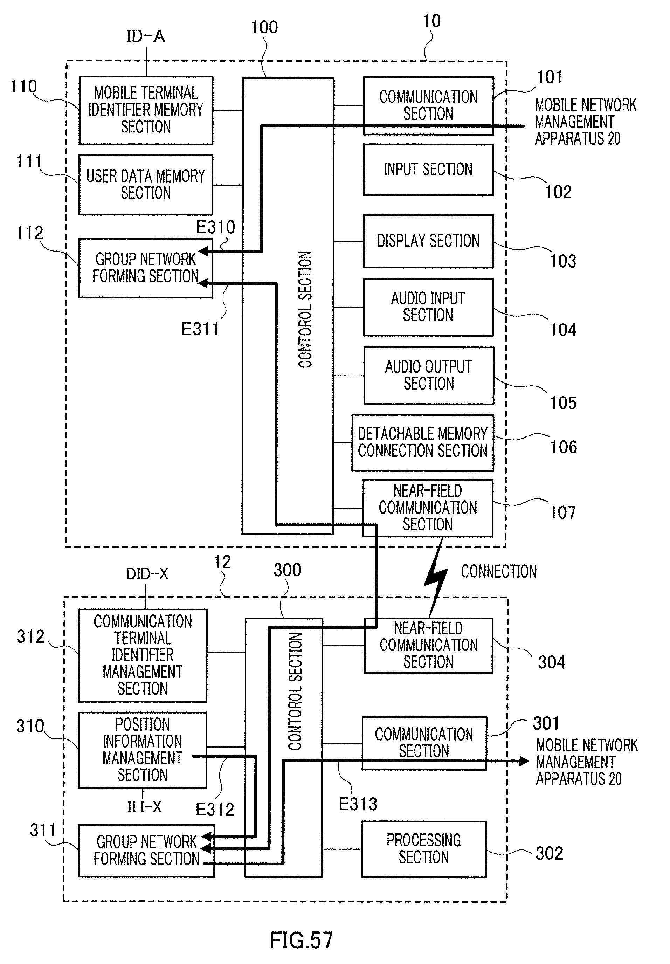

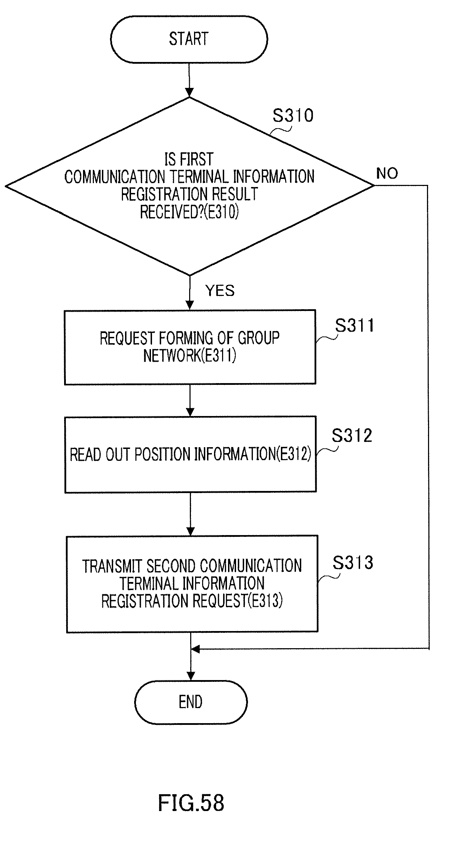

Next, data writing processing executed at mobile telephone 10 receiving the first communication terminal information registration results from mobile network management apparatus 20 receiving the first communication terminal information registration request is described with reference to FIG.57 and FIG.58. FIG.57 is a view showing a data write operation in mobile telephone 10 and in communication terminal 12, and FIG. 58 is a flowchart showing data write processing executed at mobile telephone 10 and communication terminal 12.

In FIG.57 and FIG.58, control section 100 in mobile telephone 10 verifies the presence or absence of a received signal for the first communication terminal information registration results from communication section 101 (E310) (step S310). If the first communication terminal information registration results (registration OK) are not received (step S310: "NO"), the processing is finished. If the first communication terminal information registration results (registration OK) are received (step S310: "YES"), the registration results are outputted to group network forming section 112.

When the first communication terminal information registration results (registration OK) are inputted, group network forming section 112 outputs a group network forming command to control section 100. Control section 100 then transmits a group network forming request from near-field communication section 107 to communication terminal 12 using the group network forming command (E311) (step S311).

When a group network forming request is received from near-field communication section 304, control section 300 in communication terminal 12 outputs this to group network forming section 311. When a group network forming request is inputted, group network forming section 311 reads out position information (ILI-X) from position information management section 310 (E312) (step S312), transmits a second communication terminal information registration request containing this position information from communication section 301 to mobile network management apparatus 20 (E313) (step S313), and finishes this processing. The second communication terminal information registration request may also be transmitted from communication section 101 in mobile telephone 10 to mobile network management apparatus 20. In the event that position information is already registered upon transmission of the first communication terminal information registration request from mobile telephone 10, the process is finished without this processing.

Next, second terminal information registration processing executed by mobile network management apparatus 20 receiving the second communication terminal information registration request is carried out.

As shown above, at the group network system of the third embodiment, a mobile telephone or communication terminal (household appliance or personal computer etc.) connected to a mobile telephone network or the Internet is applied as communication terminal apparatus connected to a network. Further, this is applied to mobile telephones and communication terminals that have near-field wireless communication functions.

At the group network system of the third embodiment, a mobile network management apparatus that is a group network management apparatus forms a group network by receiving a mobile terminal identifier and communication terminal identifier used in client authentication and registering this in a group network management table while receiving a registration request transmitted from a mobile telephone or communication terminal to a transmitting group network.

With the group network system of the third embodiment, a communication terminal identifier stored in the communication terminal is read out under the control of the group network forming section in the mobile telephone during registration of the communication terminal to the group network and a secure channel is secured using the mobile terminal identifier based on the mobile communication step. After establishment, the registration request and the communication terminal identifier are transmitted to the mobile network management apparatus.

Participation of a plurality of communication terminal apparatuses connected to a network such as communication terminal apparatus etc. belonging to household appliances etc. in group network services is therefore possible. Further, registration processing from the mobile communication terminal apparatus and communication terminal apparatus to the group network management apparatus utilizes near-field wireless communication. It is therefore possible to alleviate the load on the user in registration step to the group network, and circulation of the group network service is promoted.

Moreover, processing is carried out to register to a group network of a user utilizing a near-fieldwireless communication function rather than a memory card. The applicable range of the group network services is therefore broader than the case of utilizing a memory card.

### (Embodiment 4)

In a fourth embodiment, a description is given of the case of a mobile telephone where a communication terminal is housed in a mobile telephone network.

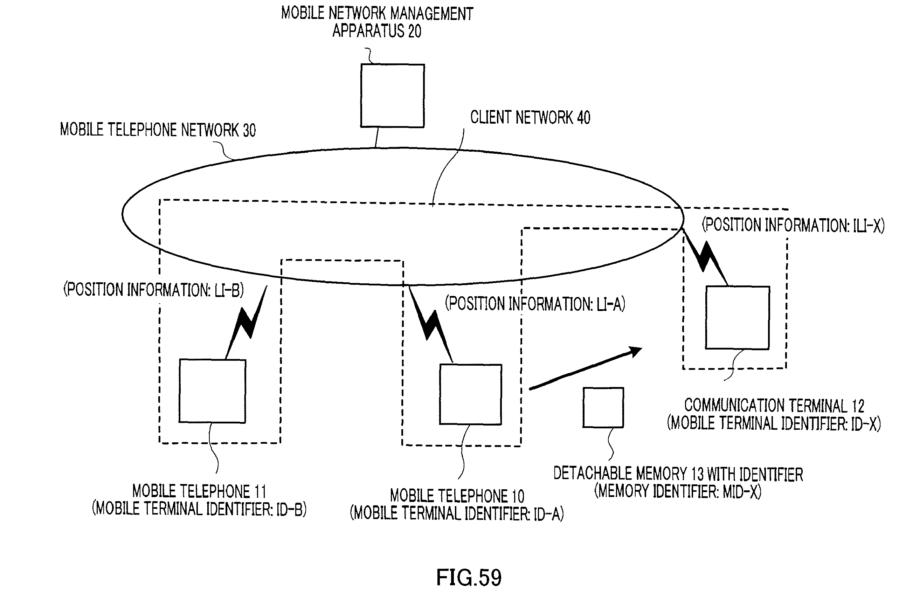

FIG.59 is a view showing a system configuration of a group network system of the fourth embodiment, and as the configuration is the same as for the group network system shown in FIG.1, each element of the configuration is given the same number and a description of the configuration is omitted. Communication terminal 12 is different from the first embodiment in that there is a mobile telephone housed in mobile telephone network 30.

The configuration of each of the mobile telephones 10 and 11, and memory card 13 is the same as for the first embodiment and a description of schematic representations and structure is omitted.

The configuration of communication terminal 12 is also the same as for mobile telephones 10 and 11 of the first embodiment and a description of schematic representations and structure is omitted. It is taken that "ID-X" taken as a mobile terminal identifier is stored at mobile terminal identifier memory section 110 of communication terminal 12.

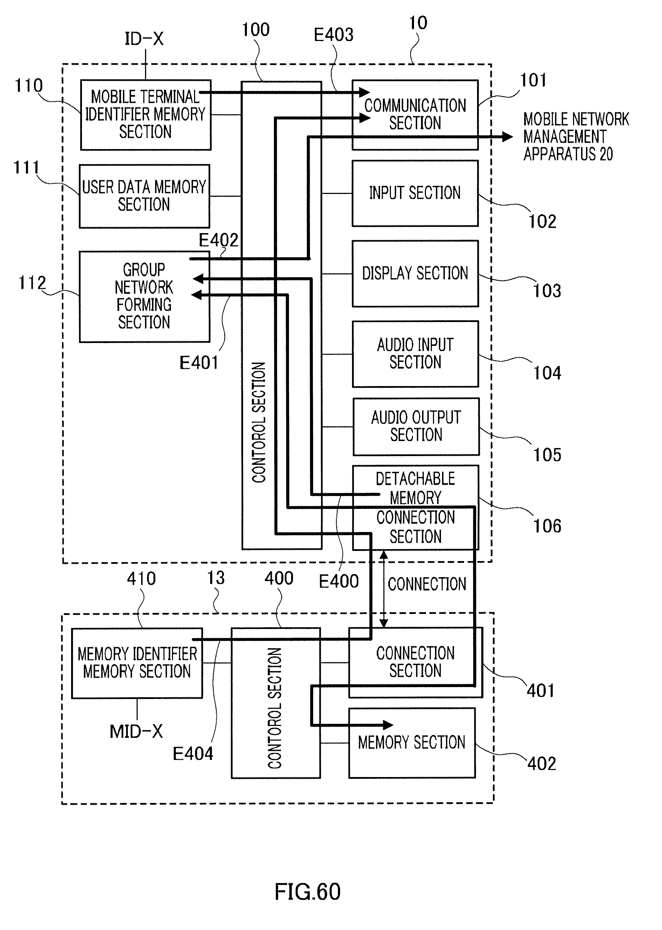

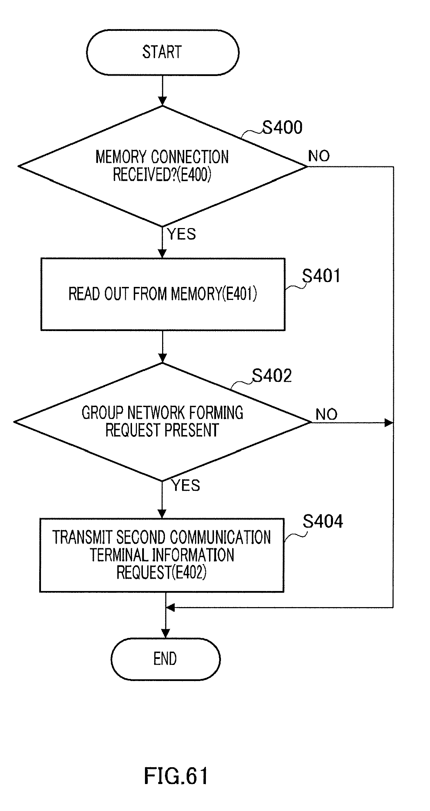

Next, a description is given with reference to FIG. 60 and FIG. 61 of processing carried out during forming of a group network at mobile telephone 10, first communication terminal information registration processing carried out at mobile network management apparatus 20, an operation of writing data to memory card 13 at mobile telephone 10, and group network processing executed at communication terminal 12 when a user takes out a memory card written with data at mobile telephone 10 and connects this memory card to communication terminal 12. FIG.60 is a view showing operation upon formation of a group network in mobile telephone 10 and memory card 13, and FIG.61 is a flowchart showing processing for forming a group network executed at communication terminal 12 and memory card 13.

In FIG.60 and FIG.61, control section 100 in mobile telephone 10 checks the presence or absence of a memory card connection signal inputted from detachable memory connection section 106 in communication terminal 12 (E400) (step S400). When a memory card connection signal is inputted (step S400: "YES"), control section 100 transmits a data read command to memory card 13 (E401) (step S401). Further, when a memory card connection signal is not inputted (step S400: "NO"), control section 100 finishes this processing. In this embodiment, a description is given of the case where the memory card connection signal is inputted from detachable memory connection section 106 but the inputting block is by no means limited, and any block that can receive a memory card connection signal is appropriate.

When a data read command is received, control section 400 in memory card 13 reads out data from memory section 402 and transmits this data to communication terminal 12 (E401).

When data is received from memory card 13, control section 100 checks the presence or absence of a group network forming request command for this data (step S402). If there is no group network forming request command (step S402: "NO"), control section 100 finishes this processing. Further, if a group network forming request command is present (step S402: "YES"), control section 100 reports the group network forming request command to group network forming section 112 (E400). Verification of the presence or absence of a group network forming request command is carried out at control section 400 before transmitting data to communication terminal 12.

Next, when REPORT of a group network forming request command is received, group network forming section 112 transmits the second communication terminal information registration request from communication section 101 to mobile network management apparatus 20 (E402) (step S404), and finishes this processing.

Communication section 101 establishes a secure channel with mobile network management apparatus 20 upon transmission of the second communication terminal information registration request using mobile terminal identifier (ID-X) of mobile terminal identifier memory section 110 based on the mobile communication step (E403). After establishment, a secure channel is established with mobile network management apparatus 20 using memory identifier (MID-X) of memory identifier memory section 410 in memory card 13 (E404) based on PK. Mobile terminal identifier (ID-X) is used in network authentication (authentication of a connection to mobile telephone network 30) of the client authentication of communication terminal 12 and memory identifier (MID-X) is used in group authentication (authentication of a connection to a group network) of client authentication of communication terminal 12. As a result, a secure channel is established with mobile network management apparatus 20 and it is possible to transmit second communication terminal information registration requests securely using this channel.

Rather than establishing a secure channel using memory identifier (MID-X) of memory identifier memory section 410, it is also possible to transmit the public key and certificate of memory identifier (MID-X) securely using a secure channel employing, for example, mobile terminal identifier (ID-X).

In the event that server authentication of mobile network management apparatus 20 is necessary, the public key and certificate for mobile network management apparatus 20 is requested in accordance with an authentication method such as PKI etc. After receipt, this authentication processing may be carried out, or authentication processing may be carried out by comparing the received data with the public key and certificate of mobile network management apparatus 20 read out from memory section 402. In the event of comparison with information for memory section 402, at communication terminal 12, it is possible to reduce processing as a result of communication with an external authentication authority etc. is no longer necessary. During transmission to mobile network management apparatus 20, position information for mobile network management apparatus 20 read out from memory section 402 can be used as this destination.

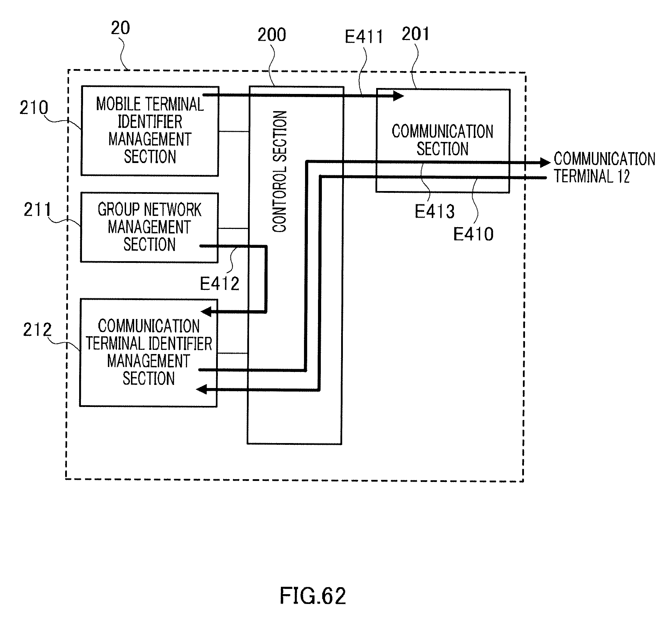

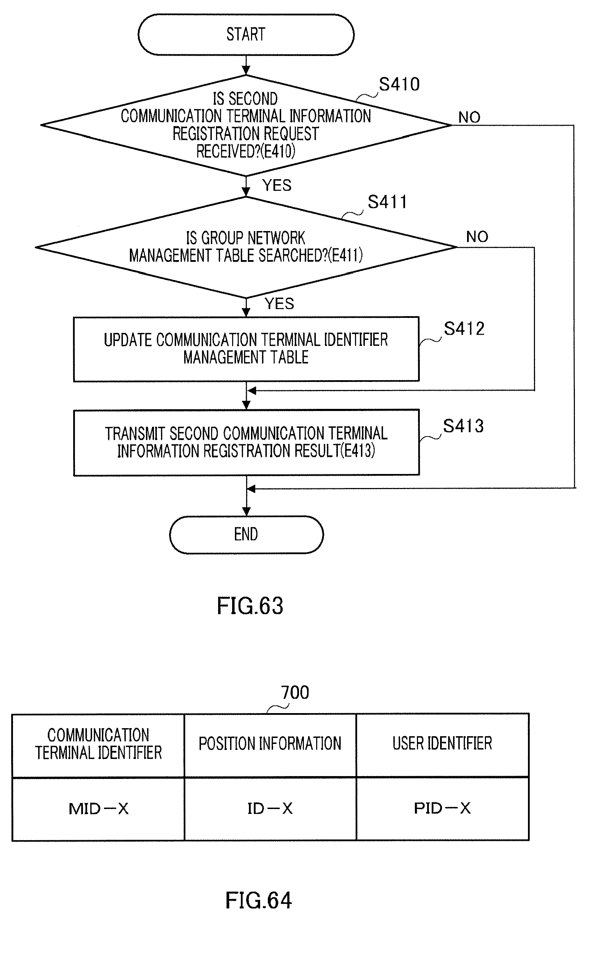

Next, a description is given with reference to FIG.62 and FIG.63 of second terminal information registration processing executed by mobile network management apparatus 20 receiving the second communication terminal information registration request. FIG.62 is a view showing the operation upon second communication terminal information registration of mobile network management apparatus 20, and FIG.63 is a flowchart showing second communication terminal information registration processing executed at mobile network management apparatus 20.

In FIG.62 and FIG.63, control section 200 of mobile network management apparatus 20 checks the presence or absence of the receipt of a second communication terminal information registration request from communication section 201 (E410) (step S410), and, if the second communication terminal information registration request is not received (step S410: "NO"), finishes this processing. Further, when receipt of the second communication terminal information registration request is confirmed (step S410: "YES"), control section 200 searches group network management table 600 of group network management section 211, and checks the presence or absence of registration of memory identifier (MID-X) of communication terminal 12 of the transmission source (E411) (step S411).

Next, in the event that the memory identifier is registered in group network management table 600 (step S411: "YES"), control section 200 registers mobile terminal identifier (ID-X) of communication terminal 12 of the transmission source in communication terminal identifier management table 700 of communication terminal identifier management section 212 (step S412) as position information. As a result of this registration operation, as shown in FIG.64, mobile terminal identifier (ID-X) is registered in the "position information" column corresponding to communication terminal 12 at communication terminal identifier management table 700.

Next, control section 200 transmits the second communication terminal information registration results (registration OK) from communication section 201 to communication terminal 12 (E413) (step S413), and finishes this processing. Further, in the event that the memory identifier is not registered in group network management table 600 (step S411: "NO"), control section 200 proceeds to step S413 without registering the position information, transmits the second communication terminal information registration results (registration NG) from communication section 201 to communication terminal 12 (E413) (step S413), and finishes this processing.

The charge for access from communication terminal 12 may be charged according to the mobile terminal identifier (ID-X) of communication terminal 12, or may be charged according to charge information of mobile terminal identifier (ID-A) registered so as to correlate with memory identifier (MID-X) of memory card 13, or charging may take place from both.

As shown above, at the group network system of the fourth embodiment, a mobile telephone connected to a mobile telephone network is applied as communication terminal apparatus connected to a network. Further, this is applied to items having a function for connecting to the detachable memory card at the mobile telephone. Further, application is also possible where an anti-tamper module that is resistant to reverse actions such as disassembly and analysis etc. and large capacity non-volatile memory are provided at the memory card to give a secure memory card. It is then possible to securely store identification information etc. in part of the non-volatile memory using a program stored in the anti-tamper module.

At the group network system of the fourth embodiment, a mobile network management apparatus that is a group network management apparatus forms a group network by receiving a mobile terminal identifier and communication terminal identifier used in client authentication and registering this in a group network management table while receiving a registration request transmitted from a mobile telephone to a transmitting group network.

Further, with the group network system of the fourth embodiment, while the mobile telephone is registered to the group network, the memory identifier stored in the memory card connected under the control of the group network forming section in the mobile telephone is read out and a secure channel is established using the mobile terminal identifier based on the mobile communication step. After establishment, the memory identifier is transmitted to the mobile network management apparatus together with the registration request.

Participation of a plurality of mobile communication terminal apparatuses connected to a mobile telephone network in group network services is therefore possible. Further, registration processing from the mobile communication terminal apparatus to the group network management apparatus utilizes a detachable memory card. It is therefore possible to alleviate the load on the user in registration to the group network, and circulation of the group network service is promoted.

Further, a secure channel is established using a mobile terminal identifier and key information stored in the memory card based on a mobile communication step PKI during a registration request from the mobile communication terminal apparatus to the group network management apparatus. The group network management apparatus then determines approval of registration to the group network of the terminal identification information from the received mobile terminal identifier and key information. This makes it possible to provide a secure group network service where user authentication etc. of the mobile communication terminal apparatus connecting to the group network is straightforward, and also broadens the range of applicability of the group network service.

Further, in the group network system of the fourth embodiment, with the group network management apparatus, charge information for the mobile communication terminal apparatus registered in the group network is collectively managed, and charging management for a plurality of mobile communication terminal apparatuses connected to a mobile telephone network belonging to a plurality of users is straightforward.

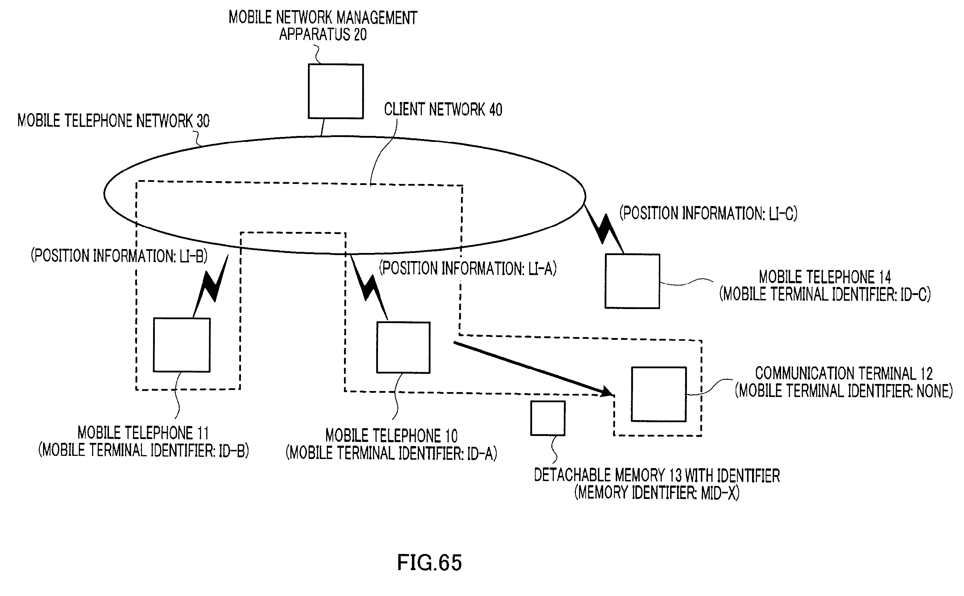

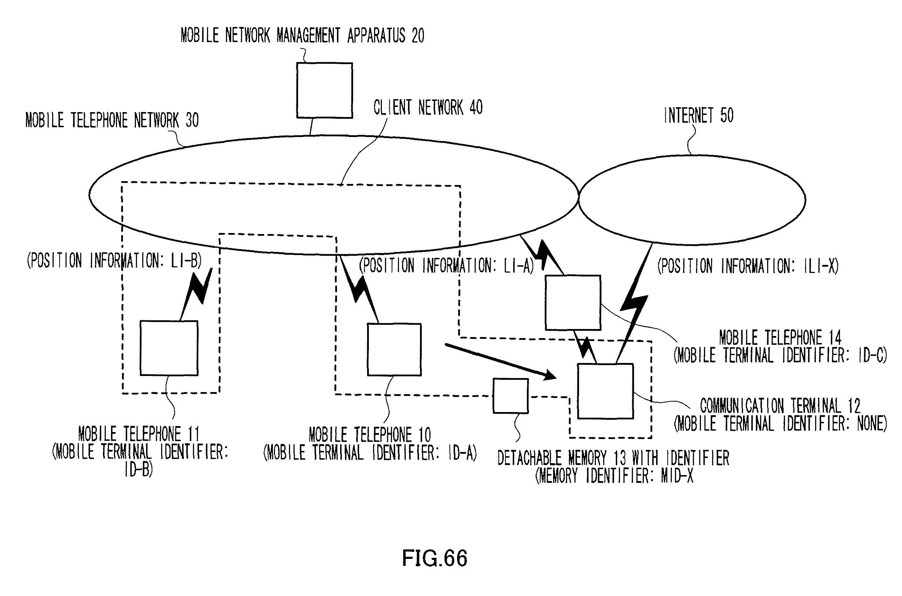

The system configuration is by no means limited to that shown in the first to fourth embodiments above, and the present invention may also be similarly applied to other system configurations as shown below. In the following, in another example of a system configuration, a brief description is given of the characteristic operation of each system shown in the system configuration views FIG.65 and FIG.66.

FIG.65 is a view showing a system configuration example for the case of communication terminal 12 carrying out communication with mobile network management apparatus 20 via mobile telephone 14 housed in mobile telephone network 30.

In this system configuration, communication terminal 12 is connected to mobile telephone 14 using a wireless communication method such as Bluetooth etc. and is connected to mobile telephone network 30 via mobile telephone 14. In this configuration example, a description is given of the case of taking a wireless communication method such as Bluetooth etc. as the communication method for connecting communication terminal 12 and mobile telephone 14 but the communication method is by no means limited in this respect, and any communication method capable of exchanging data between communication terminal 12 and mobile telephone 14 is appropriate.
Further, mobile telephone 14 may belong to group network 40 or may not belong to group network 40.

Next, a description is given of the operation of communication terminal 12 and mobile telephone 14 in FIG.65.

At the global network forming processing executed at communication terminal 12, communication terminal 12 verifies whether or not there is a connection to mobile telephone 14, and in the event that there is no connection to mobile telephone 14, carries out the same processing as in the first embodiment. Further, in the event that there is a connection to mobile telephone 14, communication terminal 12 transmits a second communication terminal information acquisition request to mobile network management apparatus 20 via mobile telephone 14 without acquiring position information. Communication terminal 12 establishes a secure channel with mobile network management apparatus 20 using memory identifier (MID-X) in memory card 13 based on PKI upon transmission of the second communication terminal information acquisition request.

Mobile telephone 14 then establishes a secure channel with mobile network management apparatus 20 using its own mobile terminal identifier (ID-C) while communication terminal 12 establishes a secure channel. After establishment, it is possible to transmit a second communication terminal information registration request securely by transferring communication between communication terminal 12 and mobile network management apparatus 20 using this channel.

In the case of this system, even while it is being made possible for a communication terminal that does not have means for connecting directly with a mobile telephone network to participate in a group network service, user authentication etc. of communication terminal apparatus connecting to the group network is straightforward, it is possible to provide a secure group network service, and the applicable range of the group network service can be broadened.

FIG.66 is a view showing an example system configuration of the case of communication terminal 12 carrying out communication with mobile network management apparatus 20 via mobile telephone 14 housed in mobile telephone network 30 and where communication terminal 12 also connects to another network such as Internet 50, etc.

In this system configuration, communication terminal 12 is connected to mobile telephone 14 using a first wireless communication method such as Bluetooth etc. and is connected to mobile telephone network 30 via mobile telephone 14.
Communication terminal 12 is connected to Internet 50 using a second wireless communication method such as wireless LAN etc. and is connected to mobile telephone network 30 via Internet 50. In this configuration example, a description is given of the case of taking a wireless communication method such as Bluetooth and wireless LAN etc. as the communication method for connecting communication terminal 12 and mobile telephone 14 and the connection method for connecting communication terminal 12 and Internet 50 but the communication methods are by no means limited in this respect, and any communication method capable of exchanging data between communication terminal 12 and mobile telephone 14 is appropriate. Further, mobile telephone 14 may or may not by belong to group network 40.

Next, a description is given of the operation of communication terminal 12 and mobile telephone 14 in FIG.66.

At the global network forming processing executed at communication terminal 12, communication terminal 12 verifies whether or not there is a connection to mobile telephone 14, and in the event that there is no connection to mobile telephone 14, carries out the same processing as in the first embodiment using the second wireless communication method. Further, in the case where mobile telephone 14 is connected to, communication terminal 12 transmits a mobile terminal identifier request to mobile telephone 14 using the first wireless communication method. Mobile telephone 14 receiving the mobile terminal identifier acquisition request verifies communication terminal 12, and in the case of OK, transmits mobile terminal identifier (ID-C) to communication terminal 12. Communication between mobile telephone 14 and communication terminal 12 carries out secure data transfer using PKI and a mobile communication step, etc. Verification of communication terminal 12 of mobile telephone 14 is such that this request is displayed at a display section etc., with communication terminal 12 then being verified as safe as a result of verification by a user, etc.

Communication terminal 12 receiving mobile terminal identifier (ID-C) then transmits a second communication terminal information acquisition request to mobile network management apparatus 20 using the second wireless communication method. Communication terminal 12 establishes a secure channel with mobile network management apparatus 20 using mobile identifier (MID-X) in memory card 13 and acquired mobile terminal identifier (ID-C) based on PKI and a mobile communication step etc. upon transmission of the second communication terminal information registration request and is capable of transmitting the communication terminal information registration request securely using this channel.

In the case of this system, even while it is being made possible for a communication terminal connecting to a mobile telephone network via a network using mobile terminal identifiers of mobile telephones existing on the same network to participate in a group network service, user authentication etc. of communication terminal apparatus connecting to the group network is straightforward, it is possible to provide a secure group network service, and the applicable range of the group network service can be broadened.

The present application is based on Japanese Patent Application No.2005-195619, filed on July 4, 2005, Japanese Patent Application No. 2005-200338, filed on July 8, 2005, and Japanese Patent Application No.2006-029069, filed on February 6, 2006, the entire contents of which are expressly incorporated by reference herein.

### Industrial Applicability

The present invention is useful as a group network system etc. for alleviating the load on a user and expanding the applicable range of a group network service when forming a group network service for a plurality of communication terminal apparatuses connected to a network.

## Claims

1. A group network forming method for grouping and registering a plurality of communication terminal apparatuses connected to a network in a group network management apparatus, the method comprising a group network registration step of transmitting together identification information of the communication terminal apparatuses to be grouped.

2. The group network forming method of claim 1, wherein the group network registration step comprises transmitting together the identification information with identification information already registered in a predetermined network and identification information not yet registered in a network.

3. A group network system for registering and grouping a plurality of communication terminal apparatuses connected to a network in a group network management apparatus, wherein:
the communication terminal apparatus comprises:
a terminal identification information memory section that stores the communication terminal identification information already registered in the group network management apparatus;
a terminal identification information acquisition section that acquires the communication terminal identification information not yet registered in the group network management apparatus; and
a transmission section that reads the communication terminal identification information from the terminal identification information memory section and the terminal identification information acquisition section and transmits the information to the group network management apparatus together with a communication terminal information registration request; and
the group network management apparatus comprises:
a receiving section that receives the communication terminal information registration request transmitted from the communication terminal apparatus and the plurality of communication terminal identification information; and
a communication terminal information memory section that registers the received plurality of communication terminal identification information.

4. A group network management apparatus for grouping a plurality of communication terminal apparatuses connected to a network, the apparatus comprising:
a receiving section that receives the communication terminal information registration request transmitted from the communication terminal apparatus and the plurality of communication terminal identification information; and
a communication terminal information memory section that groups and registers the received plurality of communication terminal identification information registration in the communication terminal information memory section.

5. The group network management apparatus of claim 4, wherein the group network management section manages charge information for the plurality of communication terminal apparatus grouped together registered in the communication terminal information memory section.

6. A mobile communication terminal apparatus for transmitting a request for registration to a group network to a group network management apparatus connected via a wireless network, the apparatus comprising:
a terminal identification information memory section that stores the communication terminal identification information already registered in the group network management apparatus;
a terminal identification information acquisition section that acquires the communication terminal identification information not yet registered in the group network management apparatus; and
a transmission section that reads the communication terminal identification information from the terminal identification information memory section and the terminal identification information acquisition section, and transmits the information to the group network management apparatus together with a communication terminal information registration request.

7. The mobile communication terminal apparatus of claim 6, further comprising a memory connection section that connects detachable memory storing individual identification information, wherein:
the terminal identification information acquisition section acquires individual identification information from the detachable memory connected to the memory connection section; and
the transmission section reads individual identification information from the terminal identification information acquisition section and transmits the information to the group network management apparatus together with the communication terminal identification information and the communication terminal information registration request.

8. A communication terminal apparatus for transmitting a communication terminal information request for registration to a group network to group network management apparatus connected via a network, the apparatus comprising:
a terminal identification information acquisition section that acquires the communication terminal identification information not yet registered in the group network management apparatus; and
a transmission section that reads the communication terminal identification information from the terminal identification information acquisition section and transmits the information to the group network management apparatus together with a communication terminal information registration request.

9. The communication terminal apparatus of claim 6, further comprising a memory connection section that connects detachable memory storing individual identification information, wherein:
the terminal identification information acquisition section acquires individual identification information from the detachable memory connected to the memory connection section; and
the transmission section reads individual identification information from the terminal identification information acquisition section and transmits the information to the group network management apparatus together with the communication terminal information registration request.
